# EUROPEAN PATENT APPLICATION

(11) **EP 1 852 406 A2**
(43) Date of publication of application: **07.11.2007**
(21) Application number: 07290523.5
(22) Date of filing: 27.04.2007
(51) Int. Cl.: C04B 38/00, B01D 39/20

(54) **honeycomb structured body, method for manufacturing honeycomb structured body, honeycomb filter and method for manufacturing honeycomb filter**

(30) Priority: 01.05.2006 JP 2006127694; 28.12.2006 WO PCT/JP2006/326285
(71) Applicant: IBIDEN CO., LTD., Ogaki-shi Gifu 503-8604 (JP)
(72) Inventor: Ohno, Kazushige Ibiden Co.Ltd., Ibi-gun 501-0695 Gifu (JP); Oya, Tomokazu Ibiden Co.Ltd., Ibi-gun 501-0695 Gifu (JP)
(74) Representative: Uchida, Kenji

(57) **Abstract**

An object of the present invention is to provide a honeycomb structured body having a low pressure loss, and the honeycomb structured body of the present invention is a pillar-shaped honeycomb structured body having a plurality of cells longitudinally placed in parallel with one another with a wall portion therebetween, wherein the honeycomb structured body mainly comprises inorganic fibers that are integrally formed therein.

## Description

### TECHNICAL FIELD

The present invention relates to a honeycomb structured body that is used for purifying exhaust gases discharged from an internal combustion engine such as a diesel engine, a method for manufacturing the honeycomb structured body, a honeycomb filter and a method for manufacturing the honeycomb filter.

### BACKGROUND ART

Particulate matters such as soot (hereinafter, also referred to as PMs) are contained in exhaust gases discharged from an internal combustion engine such as a diesel engine, and in recent years, these PMs have raised serious problems as contaminants harmful to the environment and the human body.
For this reason, various filters using ceramics honeycomb filters comprising cordierite, silicon carbide or the like have been proposed as filters that capture PMs in exhaust gases to purify the exhaust gases. Moreover, various filters of a lamination type, manufactured by laminating lamination members having through holes therein, have been proposed (for example, see Patent Document 1).

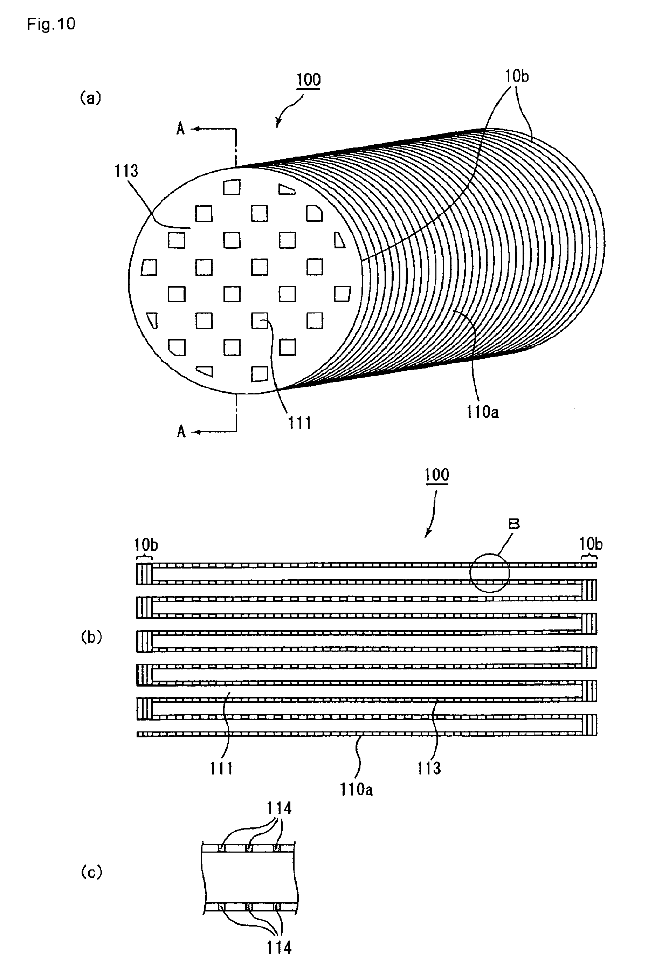

Fig. 10(a) is a perspective view that schematically illustrates one specific example of such a lamination-type honeycomb filter that is formed by laminating lamination members, each comprising a sheet-shaped inorganic fiber aggregated body with through holes, and Fig. 10(b) is an A-A line cross-sectional view of Fig. 10(a). Fig. 10(c) is an enlarged cross-sectional view of one portion illustrated by B in Fig. 10(b).

A honeycomb filter 100 has a cylindrical structure in which a number of cells 111 having either one of the ends sealed are longitudinally placed in parallel with each other with a wall portion 113 therebetween.
In other words, as illustrated in Fig. 10 (b), each of the cells 111 has either one of the end corresponding to the inlet side or the outlet side of exhaust gases sealed, so that exhaust gases, introduced into one cell 111, are allowed to flow out from another cell 111, after always having passed through the wall portion 113 separating the cells 111; thus, the wall portion 113 is allowed to function as a filter.

As illustrated in Figs. 10(a) and 10(b), the honeycomb filter is formed as a laminated body by laminating lamination members 110a having a sheet shape with a thickness of 0.1 to 20 mm, and the lamination members 110a are laminated, with through holes superposed on one another in the longitudinal direction.
Here, the state in which the through holes are laminated so as to be superposed on one another refers to a state in which the through holes formed in the adjacent lamination members are superposed successively so as to communicate with each other.
Moreover, a lamination member 10b for an end portion having through holes formed in a checkered pattern therein is laminated on an end portion thereof so that either one of the ends of each of the cells 111 is sealed by the lamination member 10b for an end portion.

In order to form the respective lamination members into a laminated body, the lamination members 110a and the lamination member 10b for an end portion are laminated in a casing (metal can-type (cylindrical) body) to be attached to an exhaust-gas pipe, and pressure is applied thereto. Thus, a honeycomb filter 100 is formed.

When an exhaust-gas purifying filter comprising a honeycomb filter having this structure is installed in an exhaust passage of an internal combustion engine, PMs in exhaust gases discharged from the internal combustion engine are captured by the wall portions 113 while passing through this honeycomb filter so that the exhaust gases are purified.

In particular, the honeycomb filter comprising an inorganic fiber aggregated body has a high porosity, and can allow much PM into the walls. In comparison with a honeycomb filter having a low porosity, since the possibility of PMs coming into contact with the catalyst supported on the inside of the wall becomes higher, it becomes possible to reduce energy required for burning PMs to a low level.

Patent Document 1: WO2005/000445

### DISCLOSURE OF THE INVENTION

### PROBLEMS TO BE SOLVED BY THE INVENTION

Here, each of the lamination members 110a that comprises inorganic fiber aggregate bodies and forms the honeycomb filter 100 is manufactured by producing, by a sheet-forming process, a slurry prepared by adding a sufficient amount of water to inorganic fibers, an organic binder, an inorganic binder and the like by using a mesh. In the case where the slurry is produced by the sheet-forming process into the lamination member 110a, inorganic fibers tend to be distributed on the surface portion of the lamination member 110a more densely in comparison with the inner portion thereof.

Moreover, in the case where the lamination members 110a are laminated with a pressure applied thereto so that a honeycomb filter is formed, since the surface portions, which have inorganic fibers more densely distributed of the lamination members 110a, are made adjacent with each other and compressed, the inorganic fibers are more densely distributed on each lamination interface 114 (see Fig. 10(c)) that forms each border portion of the lamination members 110a, in comparison with the other portions.

Here, it is more difficult to allow exhaust gases to pass through portions in which the inorganic fibers are densely distributed than to allow them to pass through the other portions; consequently, when such a lamination interface in which inorganic fibers are densely distributed is formed, the pressure loss in the entire honeycomb filter is increased.

The honeycomb filter comprising inorganic fiber aggregated bodies has a pressure loss lower than that of the honeycomb filter comprising ceramics; however, when there is a portion with inorganic fibers densely distributed, exhaust gases are allowed to preferentially flow through a portion with inorganic fibers sparsely distributed, with the result that it is not possible to use the entire wall effectively, sometimes failing to reduce the PM burning energy to a low level. Therefore, in an attempt to manufacture a honeycomb filter by using inorganic fibers, there have been strong demands for methods for preparing a honeycomb filter that is more homogeneous, and has a lower pressure loss.

### MEANS FOR SOLVING THE PROBLEMS

In order to solve the above-mentioned problems, the inventors of the present invention have made extensive research efforts, and consequently found that in the case where a honeycomb structured body mainly comprising inorganic fibers, with the inorganic fibers integrally formed, is manufactured, since no portions in which the inorganic fibers are comparatively densely distributed exist in the inside of the honeycomb structured body because there are no lamination interfaces in the honeycomb structured body, and since an increase in the pressure loss, caused by the existence of the above-mentioned portions, no longer occurs, it becomes possible to manufacture a honeycomb structured body having a low pressure loss; thus, the honeycomb structured body of the present invention has been achieved.
Moreover, a honeycomb filter, which is prepared by sealing either one of the ends of each of the cells in the honeycomb structured body having such a low pressure loss, has also been completed.
Furthermore, methods for manufacturing the honeycomb structured body having such a low pressure loss and a honeycomb filter have also been found.

A honeycomb structured body according to a first aspect of the present invention is a pillar-shaped honeycomb structure having a plurality of cells longitudinally placed in parallel with one another with a wall portion therebetween, wherein the honeycomb structured body mainly comprises inorganic fibers that are integrally formed therein.

Preferably, the honeycomb structured body according to the first aspect of the present invention comprises the inorganic fibers and an inorganic matter, wherein the inorganic fibers are firmly fixed to one another through the inorganic matter.

In the honeycomb structured body according to the first aspect of the present invention, the above-mentioned inorganic matter preferably exists at an intersection of the inorganic fibers or in the vicinity thereof, and the inorganic matter exists locally at the intersection or in the vicinity thereof.

Furthermore, the above-mentioned inorganic matter is preferably melted and solidified so that the inorganic fibers are fixed to one another.

In the honeycomb structured body according to the first aspect of the present invention, the above-mentioned inorganic matter preferably contains silica, and the above-mentioned inorganic fibers preferably comprise one kind selected from the group consisting of silicon carbide, alumina, basalt, silica, silica-alumina, titanium and zirconia.

In the honeycomb structured body according to the first aspect of the present invention, a catalyst is preferably supported on at least one portion of the inorganic fibers.

In the honeycomb structured body according to the first aspect of the present invention, the above-mentioned catalyst is preferably an oxide catalyst containing at least CeO₂. In addition, the above-mentioned oxide catalyst is preferably at least one kind selected from the group consisting of: CeO₂, ZrO₂, FeO₂, Fe₂O₃, CuO, CuO₂ Mn₂O₃, MnO and complex oxides indicated by a composition formula AₙB₁₋ₙCO₃, provided that in the formula, A is La, Nd, Sm, Eu, Gd or Y, B is an alkali metal or alkali-earth metal, and C is Mn, Co, Fe or Ni.

In the honeycomb structured body according to the first aspect of the present invention, the amount of support of the catalyst is set in the range of 10 to 200 g/l with respect to the apparent volume of the honeycomb structured body.

A method for manufacturing the honeycomb structured body according to a second aspect of the present invention is a method for manufacturing a honeycomb structured body according to the first aspect of the present invention comprising: mixing inorganic fibers A and inorganic fibers B and/or inorganic particles C that are melted at a temperature at which the inorganic fibers A are neither melted nor sublimated; extrusion-molding a mixture obtained by mixing the inorganic fibers A and the inorganic the fibers B and/or the inorganic particles C, by using a die with predetermined holes formed therein to form a pillar-shaped molded body with a number of cells formed in the longitudinal direction; and carrying out a heating treatment on the above-mentioned molded body at a temperature of the heat-resistant temperature of the inorganic fibers A or less, and at a temperature of the softening temperature of the inorganic fibers B and/or the inorganic particles C or more.

A method for manufacturing the honeycomb structured body according to a third aspect of the present invention is a method for manufacturing a honeycomb structured body according to the first aspect of the present invention comprising: mixing inorganic fibers A and inorganic fibers B and/or inorganic particles C that are melted at a temperature at which the inorganic fibers A are neither melted nor sublimated, as well as resin; installing vertically a plurality of pillar-shaped cores in a can-type (cylindrical) container in a manner so as to make the long axis direction of the pillar-shaped cores used for forming cells in the honeycomb structured body in parallel with the longitudinal direction of the can-type (cylindrical) container that is filled in with the mixture obtained by mixing the inorganic fibers A and the inorganic fibers B and/or the inorganic particles C, as well as in a manner so as to form a lattice pattern in a plan view; filling the above-mentioned mixture into the can-type (cylindrical) container in which the cores are vertically installed; curing the resin in the mixture filled into the can-type (cylindrical) container to form a cured resin body; forming a pillar-shaped molded body in which a number of cells have been formed in the longitudinal direction, by removing the cores from the cured resin body; removing organic substances contained in the molded body in which a number of cells have been formed in the longitudinal direction, by using a heat-degreasing operation; and carrying out a heating treatment of the molded body that has been degreased, at a temperature of the heat-resistant temperature of the inorganic fibers A or less, and at a temperature of the softening temperature of the inorganic fibers B and/or the inorganic particles C or more.

A method for manufacturing the honeycomb structured body according to a fourth aspect of the present invention is a method for manufacturing a honeycomb structured body according to the first aspect of the present invention comprising: mixing inorganic fibers A and inorganic fibers B and/or inorganic particles C that are melted at a temperature at which the inorganic fibers A are neither melted nor sublimated, as well as resin; filling the mixture, obtained by mixing the inorganic fibers A and the inorganic fibers B and/or the inorganic particles C, into a frame member, which is formed by a bottom plate on which pillar members used for forming cells of the honeycomb structured body are installed vertically to the main surface in a lattice pattern in a plan view and an outer frame member formed so as to enclose the periphery of the bottom plate and the pillar members; curing the resin in the mixture filled in to form a cured resin body; removing the pillar members from the cured resin body and detaching the entire frame to form a pillar-shaped molded body in which a number of cells have been formed in the longitudinal direction; removing organic substances contained in the pillar-shaped molded body in which a number of cells have been formed, by using a heat-degreasing operation; and carrying out a heating treatment of the molded body that has been degreased, at a temperature of the heat-resistant temperature of the inorganic fibers A or less, and at a temperature of the softening temperature of the inorganic fibers B and/or the inorganic particles C or more.

A method for manufacturing the honeycomb structured body according to a fifth aspect of the present invention is a method for manufacturing a honeycomb structured body according to the first aspect of the present invention, and is performed by using a vessel that includes a vessel main body; a mesh formed on the bottom portion of the vessel main body; pillar-shaped masks that are installed vertically on the mesh perpendicularly and in a lattice pattern in a plan view, and are used for forming cells of the honeycomb structured body; and a liquid-filling unit that forms each space surrounded by the pillar-shaped masks, with the mesh serving as the bottom face, into which the mixture is charged, comprising: mixing inorganic fibers A and inorganic fibers B and/or inorganic particles C that are melted at a temperature at which the inorganic fibers A are neither melted nor sublimated; charging the mixture obtained by mixing the inorganic fibers A and the inorganic the fibers B and/or the inorganic particles C, into the liquid-filling unit; discharging moisture from the mixture through the mesh so that a dehydrated body is formed; removing the pillar-shaped masks from the dehydrated body to form a pillar-shaped molded body having a number of cells formed in the longitudinal direction; and carrying out a heating treatment of the pillar-shaped molded body in which a number of cells have been formed, at a temperature of the heat-resistant temperature of the inorganic fibers A or less, and at a temperature of the softening temperature of the inorganic fibers B and/or the inorganic particles C or more.

In the methods for manufacturing a honeycomb structured body according to the second to fifth aspects of the present invention, the inorganic fibers B and/or the inorganic particles C preferably contain silica, and the inorganic fibers A preferably comprise at least one kind selected from the group consisting of silicon carbide, alumina, basalt, silica, silica-alumina, titanium and zirconia.
Moreover, the blending ratio between the inorganic fibers A and the inorganic fibers B and/or the inorganic particles C is preferably set in the range of (2 : 8) to (8 : 2).

Preferably, the methods for manufacturing the honeycomb structured body according to the second to fifth aspects of the present invention further comprise carrying out an acid treatment on the pillar-shaped molded body.
Moreover, preferably, the methods for manufacturing the honeycomb structured body according to the second to fifth aspects of the present invention further comprise supporting an oxide catalyst on the inorganic fibers.

In a honeycomb filter comprises the honeycomb structured body according to a sixth aspect of the present invention, either one of the ends of each of the cells in the honeycomb structured body is sealed so that the honeycomb structured body is allowed to function as a filter.

In the honeycomb filter according to the sixth aspect of the present invention, a lamination member for an end portion mainly comprising is preferably laminated on each of two end portions of the honeycomb structured body.

In the honeycomb filter according to the sixth aspect of the present invention, preferably, the honeycomb structured body in which either one of the ends of each of the cells is sealed, or the honeycomb structured body and the lamination members for end portions mainly comprising metal are installed in a metal container.

A method for manufacturing the honeycomb structured body according to a seventh aspect of the present invention preferably comprises laminating a lamination member for an end portion mainly comprising metal on two end portions of the honeycomb structured body manufactured by the method for manufacturing a honeycomb structured body according to the second to fifth aspects of the present invention.

Preferably, a method for manufacturing the honeycomb structured body according to the seventh aspect of the present invention further comprises installing the honeycomb structured body and the lamination member for an end portion in a metal container.

### EFFECTS OF THE INVENTION

Since the honeycomb structured body of the first aspect of the present invention mainly comprises inorganic fibers with the inorganic fibers integrally formed therein, no lamination interface is formed therein. For this reason, it is possible to provide a structure which can prevent the occurrence of portions in which inorganic fibers are distributed comparatively densely in the honeycomb structured body, and consequently to manufacture a honeycomb structured body that is free from an increase in the pressure loss due to the portions in which the inorganic fibers are distributed comparatively densely.

In the method for manufacturing a honeycomb structured body according to the second aspect of the present invention, the mixture containing the inorganic fibers is extruded by using a die with predetermined holes formed therein so that a pillar-shaped molded body is formed, and by carrying out a heating treatment on this, it is possible to manufacture a honeycomb structured body that mainly comprises inorganic fibers, with the inorganic fibers integrally formed therein, and has a low pressure loss, without the necessity of complex processes and expensive apparatuses.
Furthermore, by changing the shape of the die, it becomes possible to manufacture honeycomb structured bodies having various outer shapes and cell shapes.

Moreover, in the method for manufacturing a honeycomb structured body according to the third aspect of the present invention, the mixture, prepared by mixing inorganic fibers and resin, is filled into the container in which cores are installed vertically in a lattice pattern in a plan view, and after curing the resin, the cores and the resin are removed so that a pillar-shaped molded body is formed, and by carrying out a heating treatment on this, it is possible to manufacture a honeycomb structured body that mainly comprises inorganic fibers, with the inorganic fibers integrally formed therein, and has a low pressure loss, without the necessity of complex processes and expensive apparatuses.
Furthermore, since the container and the shape of the cores can be easily changed, it becomes possible to manufacture honeycomb structured bodies with various outer shapes, not limited to a pillar shape, and cells having various shapes, such as those having a step difference inside the bottomed hole.

Furthermore, in the method for manufacturing a honeycomb structured body according to the fourth aspect of the present invention, the mixture, prepared by mixing inorganic fibers and resin, is filled into the frame member in which pillar members are placed so as to stand in a lattice pattern in a plan view, and after curing the resin, the frame member is removed so that a pillar-shaped molded body is formed, and by carrying out a heating treatment on this, it is possible to manufacture a honeycomb structured body that mainly comprises inorganic fibers, with the inorganic fibers integrally formed therein, and has a low pressure loss, without the necessity of complex processes and expensive apparatuses.
Furthermore, by changing the shapes of the pillar members and the outer frame member, it becomes possible to manufacture honeycomb structured bodies having various outer shapes and cell shapes.

In addition, in the method for manufacturing a honeycomb structured body according to the fifth aspect of the present invention, the mixture, prepared by mixing the inorganic fibers and inorganic fibers and/or inorganic particles, is filled into a vessel that includes a mesh on a bottom face and pillar-shaped masks that are installed vertically to the bottom face mesh perpendicularly to the mesh, in a lattice pattern in a plan view, and the moisture in the mixture is drained through the mesh so that a pillar-shaped molded body comprising the inorganic fibers is formed, and by carrying out a heating treatment on this, it is possible to manufacture a honeycomb structured body that mainly comprises inorganic fibers, with the inorganic fibers integrally formed therein, and has a low pressure loss, without the necessity of complex processes and expensive apparatuses.

Moreover, the honeycomb filter according to the sixth aspect of the present invention, which mainly comprises inorganic fibers, with the inorganic fibers integrally formed therein, has a structure in which either one of the ends of each of the cells of the honeycomb structured body having no lamination interface is sealed so that it is possible to prepare a honeycomb filter that is homogeneous and has a low pressure loss.

In the method for manufacturing a honeycomb filter according to the seventh aspect of the present invention, since the lamination members for end portions comprising metal are laminated on the two ends of a honeycomb structured body mainly comprising inorganic fibers, with the inorganic fibers integrally formed therein so that either one of the ends of each of the cells is sealed; therefore, it is possible to prepare a honeycomb filter that is homogeneous and has a low pressure loss.

### BEST MODE FOR CARRYING OUT THE INVENTION

First, the following description will discuss a honeycomb structured body according to the first aspect of the present invention and a honeycomb filter according to the sixth aspect of the present invention.

The honeycomb structured body according to the first aspect of the present invention is a pillar-shaped honeycomb structured body having a plurality of cells longitudinally placed in parallel with one another with a wall portion therebetween, wherein it mainly comprises inorganic fibers, with the inorganic fibers integrally formed therein.

Here, the integrally formed structure refers not to a structure in which the honeycomb structured body is formed by aggregating some parts, but to a structure in which it is formed as a single inseparable unit.

Moreover, the honeycomb filter according to the sixth aspect of the present invention is characterized by a structure in which either one of the ends of each of the cells in the honeycomb structured body is sealed so that the honeycomb structured body is allowed to function as a filter.
Moreover, with respect to the honeycomb filter according to the sixth aspect of the present invention, lamination members for end portions, mainly comprising metal, are preferably laminated on the two end portions of the honeycomb structured body.
Furthermore, in the honeycomb filter according to the sixth aspect of the present invention, the honeycomb structured body with either one of the ends of each of the cells being sealed, or the honeycomb structured body and the lamination members for end portions mainly comprising metal are preferably disposed in a metal container.

Referring to the drawings, the following description will discuss the honeycomb structured body according to the first aspect of the present invention and the honeycomb filter according to the sixth aspect of the present invention.

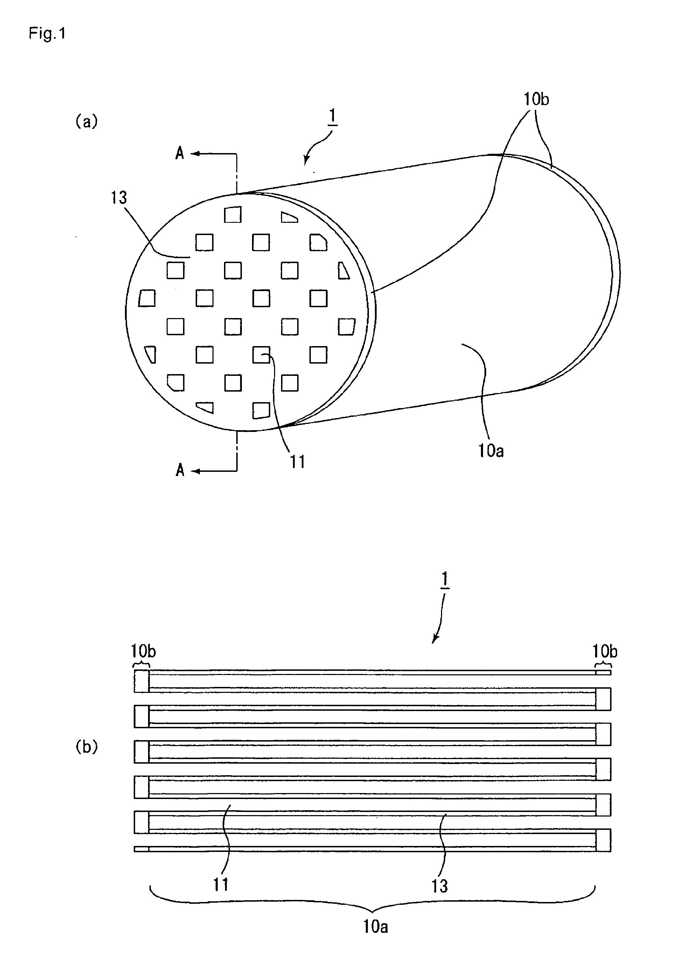

Fig. 1(a) is a perspective view that schematically illustrates a specific example of a honeycomb filter formed by laminating lamination members for end portions on the two ends of the honeycomb structured body of the present invention, and Fig. 1(b) is an A-A line cross-sectional view.

A cylindrical honeycomb filter 1 is formed by laminating lamination members 10b for end portion on the two ends of a honeycomb structured body 10a.
The honeycomb structured body 10a mainly comprises inorganic fibers, with the inorganic fibers integrally formed therein, and has a number of cells 11 that are separated by a wall portion (cell wall) 13, and each of the cells 11 penetrates from one of the ends to the other end of the honeycomb structured body 10a.
Either one of the ends of each of the cells is sealed by the lamination member 10b for an end portion. Here, the lamination member for an end portion will be described later.

As illustrated in Fig. 1 (b), the cell 11 has either one of its ends corresponding to the inlet side or the outlet side of exhaust gases sealed, so that exhaust gases, introduced into one cell 11, are allowed to flow out from another cell 11, after always having passed through the wall portion 13 separating the cells 11; thus, the wall portion 13 is allowed to function as a filter.

In the honeycomb filter 100 (see Fig. 10(a)) formed by laminating a number of lamination members 110a comprising inorganic fiber aggregated bodies, there are lamination interfaces (see Fig. 10(c)) in which inorganic fibers are densely distributed; in contrast, since the honeycomb structured body of the present invention is not formed by lamination, no lamination interfaces exist therein.
The above-mentioned lamination interfaces having inorganic fibers densely distributed make it difficult for exhaust gases to pass therethrough to cause an increase in pressure loss; however, the honeycomb structured body according to the first aspect of the present invention having no lamination interfaces allows exhaust gases to easily pass therethrough, and it is free from an increase in the pressure loss, thereby making it possible to provide a honeycomb structured body having a low pressure loss. By manufacturing a honeycomb filter by using this, the resulting honeycomb filter is also allowed to have a low pressure loss.

Moreover, since the honeycomb structured body according to the first aspect of the present invention mainly comprises inorganic fibers, the honeycomb structured body is allowed to have a high porosity. The high porosity makes it possible to lower the pressure loss, and allows PMs to enter the inside of the wall; thus, since the possibility of PMs coming into contact with the catalyst supported on the inside of the wall becomes higher, it becomes possible to reduce energy required for burning PMs to a low level.

Since the honeycomb structured body that comprises inorganic fibers having a high porosity integrally formed therein has a small heat capacity, it is quickly heated up to an active temperature of the catalyst by exhaust heat generated by the internal combustion engine. In particular, when placed right under the engine as a honeycomb filter so as to effectively utilize the exhaust heat, the effect is advantageously obtained.

The vertical cross-sectional shape of the honeycomb structured body and the honeycomb filter is not limited to a round shape, and various shapes such as a rectangular shape may be used; however, it is preferable to use a shape enclosed only by a curved line or by curved lines and straight lines.
In addition to a round shape, specific examples thereof include a rectangular pillar shape, an elongated round shape (racetrack shape), a shape in which one portion of a simple closed curved line such as a rectangular pillar shape or a racetrack shape has a recess portion (concave shape), and the like.

The honeycomb structured body according to the first aspect of the present invention, mainly comprising inorganic fibers, is formed by these inorganic fibers and an inorganic matter, with the inorganic fibers being firmly fixed to one another through the inorganic matter.
Here, preferably, the portions at which the inorganic fibers are firmly fixed to one another are mainly located at an intersection of the inorganic fibers or in the vicinity thereof so that the inorganic matter is locally located at the intersection of the inorganic fibers or in the vicinity thereof.
The fixed state at an intersection or in the vicinity thereof refers to a state in which the inorganic fibers are firmly fixed to one another through the inorganic matter that is locally located (present) at the intersection of the inorganic fibers (with or without mutual contacts among the inorganic fibers), a state in which the inorganic fibers are firmly fixed to one another through the inorganic matter that is locally located (present) in the vicinity of the intersection of the inorganic fibers, or a state in which the inorganic fibers are firmly fixed to one another through the inorganic matter that is locally located (present) over the entire area including the intersection of the inorganic fibers and the vicinity thereof.
Moreover, the inorganic matter is preferably melted and solidified so as to fix the intersection of the inorganic fibers or the vicinity thereof.
Referring to the drawings, the following description will discuss this arrangement.

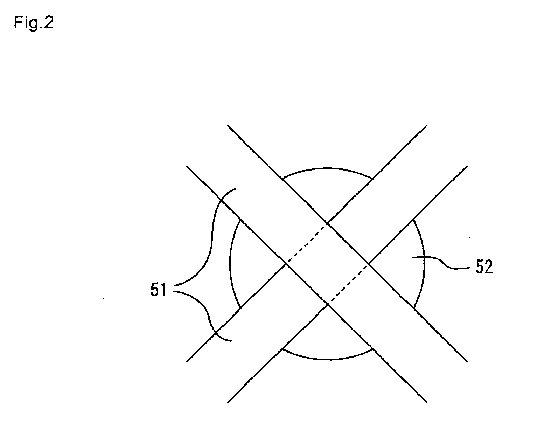

Fig. 2 is a cross-sectional view that schematically illustrates one portion of the inorganic fibers that form the honeycomb structured body according to the first aspect of the present invention. Here, the cross-sectional view of Fig. 2 illustrates a cross section in which crossing inorganic fibers are cut in the length direction.
The honeycomb structured body according to the first aspect of the present invention, mainly comprising inorganic fibers, is formed by these inorganic fibers and an inorganic matter, with the inorganic fibers being firmly fixed to one another through the inorganic matter. Although not particularly limited, the fixed state is preferably formed so that the portions at which the inorganic fibers are firmly fixed to one another are located at an intersection of the inorganic fibers or in the vicinity thereof, with the inorganic matter being locally located at the intersection of the inorganic fibers or in the vicinity thereof.
In the case where, as illustrated in Fig. 2, the inorganic matter 52 is firmly fixed at the intersection between the inorganic fibers 51 forming a honeycomb structured body or in the vicinity thereof, the inorganic matter 52, firmly fixed on a intersection or in the vicinity thereof, serves so as to simultaneously couple two of the inorganic fibers to each other at the intersection or in the vicinity thereof. With respect to the fixed portion, not only one fixed portion, but also two or more fixed portions are present on one inorganic fiber, with the result that many inorganic fibers are entangled with one another in a complex manner; thus, it becomes possible to prevent untangled inorganic fibers. Moreover, it becomes possible to improve the strength of the honeycomb structured body.

In the case where the inorganic matter 52 is locally located at an intersection of the inorganic fibers 51 or in the vicinity thereof, many of the inorganic fibers 51 are coated with the inorganic matter 52 at the intersection of other inorganic fibers 51 or in the vicinity thereof, with the inorganic matter being hardly fixed to the other portions.
In this case, the mutual intersection between the inorganic fibers or the vicinity thereof refers to an area within a distance of approximately ten times the fiber diameter of the inorganic fibers from the point at which the inorganic fibers are in closest contact with each other.

Moreover, in the honeycomb structured body according to the first aspect of the present invention, the inorganic matter 52 is preferably melted and solidified to fix the intersection between the inorganic fibers or the vicinity thereof.
By allowing the inorganic matter 52 to be melted and solidified to fix the inorganic fibers 51, the bond strength between the inorganic fibers serving as the basic constituent of the honeycomb structured body according to the first aspect of the present invention becomes higher, making it possible to further prevent untangled inorganic fibers, and consequently to further improve the strength of the honeycomb structured body.

The tensile strength of the honeycomb structured body is preferably set to 0.3 MPa or more, more preferably, to 0.4 MPa or more.
The tensile strength of less than 0.3 MPa sometimes fails to provide sufficient reliability to a honeycomb filter using the above-mentioned honeycomb structured body.
Here, the tensile strength can be measured by forming the honeycomb structured body into a sheet shape, with the two ends thereof being fixed by jigs, and by measuring this by the use of an INSTRON type universal tensile meter.

In the above-mentioned honeycomb structured body, the intersection of the inorganic fibers to which the inorganic matter is firmly fixed or the vicinity thereof are preferably set to occupy 20% or more of the entire intersection among the inorganic fibers or the entire vicinity thereof.
The rate of less than 20% tends to cause insufficient strength in the honeycomb structured body.
Here, with respect to the rate of the intersection of the inorganic fibers to which the inorganic matter is firmly fixed or the vicinity thereof, the calculations are carried out in the following manner: a plurality of portions of the honeycomb structured body are observed under a microscope, and within each of the observation views, the number of intersections of the inorganic fibers and the vicinities thereof, as well as the number of intersections of the inorganic fibers to which the inorganic matter is firmly fixed and the vicinities thereof, is counted so that the rate is found, and the average value is calculated.

The honeycomb structured body mainly comprises inorganic fibers, and is also formed by these inorganic fibers and an inorganic matter.
With respect to the material for inorganic fibers, examples thereof include: oxide ceramics such as silica-alumina, mullite, alumina, silica, titania and zirconia; nitride ceramics such as silicon nitride and boron nitride; carbide ceramics such as silicon carbide; basalt, and the like. Each of these may be used alone or two or more kinds of these may be used in combination.

Among these, at least one kind selected from the group consisting of silicon carbide, alumina, basalt, silica, silica-alumina, titania and zirconia is preferably used.
Thus, the honeycomb structured body using these materials exerts a superior heat resistance.

With respect to the fiber length of the inorganic fibers, a preferable lower limit value is 0.1 mm, and a preferable upper limit value is 100 mm.
The fiber length of less than 0.1 mm makes it difficult to firmly fix the inorganic fibers to one another through an inorganic matter, sometimes failing to provide sufficient strength; in contrast, the fiber length of more than 100 mmmakes it difficult to manufacture a homogeneous honeycomb structured body, sometimes failing to provide a honeycomb structured body having sufficient strength.
A more preferable lower limit value of the fiber length is 0.5 mm, and a more preferable upper limit value is 50 mm.

With respect to the fiber diameter of the inorganic fibers, a preferable lower limit value is 0. 3 µm, and a preferable upper limit value is 30 µm.
The fiber diameter of less than 0.3 µm tends to cause the inorganic fiber to be easily broken, with the result that the obtained honeycomb structured body becomes vulnerable to wind erosion; in contrast, the fiber diameter of more than 30 µm makes it difficult for inorganic fibers to be firmly fixed to one another through an inorganic matter, sometimes failing to provide sufficient strength. The lower limit value of the fiber diameter is more preferably set to 0.5 µm, and the upper limit value thereof is more preferably set to 15 µm.

With respect to the inorganic matter, for example, those materials which are melted at a temperature at which the inorganic fibers are not melted or sublimated may be used. Moreover, those materials which are melted at a temperature less than the heat-resistant temperature of the inorganic fibers are preferably used as the inorganic matter.
Here, taking the temperature at which the inorganic fibers to be combined are melted or sublimated, the heat resistance temperature of the inorganic fibers or the like into consideration, for example, those inorganic matters which are melted at a temperature of the heat-resistant temperature of the inorganic fibers or less may be used. More specifically, for example, in the case where alumina is used as the inorganic fibers, those inorganic matters which are melted at 1300 °C or less may be used.
With respect to the inorganic matter, those containing silica are preferably used, and specific examples thereof include inorganic glass such as silicate glass, silicate alkali glass and borosilicate glass, and the like.

With respect to the apparent density of the honeycomb structured body, a preferable lower limit value is set to 0.04 g/cm³ and a preferable upper limit value is set to 0.4 g/cm³.
The apparent density of less than 0.04 g/cm³ causes insufficient strength and consequently tends to make the resulting product more vulnerable to damages. In addition, the apparent density of 0.4 g/cm³ or less is preferable since this level is suitable for continuously burning PMs. Here, in the present specification, the apparent density refers to a value obtained by dividing the mass (g) of a sample by the apparent volume (cm³) of the sample, and the apparent volume refers to a volume including pores and apertures (cells) of the sample.

With respect to the porosity of the honeycomb structured body according to the first aspect of the present invention, a preferable lower limit is 75%, and a preferable upper limit is 95%.

The porosity of less than 75% makes it difficult to raise the inner temperature of the filter to a temperature required for burning PMs in regenerating a filter, and also makes it difficult for PMs to enter the inside of each pore, with the result that the continuous regenerating capability of the honeycomb structured body might be lowered. In contrast, the porosity of more than 95% makes the occupying rate of pores too high, making it difficult to properly maintain the strength of the entire honeycomb structured body.

In addition, the average pore diameter of the honeycomb structured body according to the first aspect of the present invention is not particularly limited, and the lower limit is preferably set to 1µm, and the upper limit is preferably set to 100µm. When the average pore diameter is less than 1µm, PMs may not be filtered at the deep layers inside the cell walls, with the result that the PMs are hardly made in contact with the catalyst supported on the inside of the cell wall. On the other hand, when the average pore diameter is more than 100µm, PMs may easily pass through the pores and thus the PMs cannot be captured sufficiently, resulting in failure to function as a filter.
Here, the above-mentioned porosity and pore diameter can be measured through known methods, such as a measuring method using a mercury porosimeter, Archimedes method and a measuring method using a scanning electron microscope (SEM).

Moreover, in the honeycomb structured body according to the first aspect of the present invention, the distance between adjacent cells (that is, the thickness of a cell wall) is preferably set to 0.2 mm or more. The distance of less than 0.2 mm tends to cause degradation in the strength of the honeycomb structured body.

Here, with respect to the distance between adjacent cells (the thickness of the cell wall), a preferable upper limit is set to 5.0 mm. When the thickness of the cell wall is too high, the aperture ratio and/or the filtration area of each cell become smaller, resulting in an increase in pressure loss. Moreover, ashes generated upon burning of PMs tend to enter the pores deeply, making it difficult to draw the ashes. Supposing that an area within which deep-layer filtering of PMs can be carried out is set as an effective area of a wall for soot capturing, the rate of the effective area relative to the honeycomb structured body is lowered.

In the honeycomb structured body according to the first aspect of the present invention, with respect to the cell density on a plane perpendicular to the lamination face of the lamination members, not particularly limited, a preferable lower limit is set to 0.16 pcs/cm² (1.0 pcs/in²) , and a preferable upper limit is set to 93.0 pcs/cm² (600.0 pcs/in²). A more preferable lower limit is set to 0.62 pcs/cm² (4.0 pcs/in²) and a more preferable upper limit is set to 77.5 pcs/cm² (500.0 pcs/in²) .

Moreover, in the honeycomb structured body according to the first aspect of the present invention, with respect to the size of a cell on a plane perpendicular to the longitudinal direction of the cells, not particularly limited, a preferable lower limit is set to 0.8 mm × 0.8 mm, and a preferable upper limit is set to 16.0 mm × 16.0 mm.

In the case where irregularities are formed on the inner surface of each of the cells forming the honeycomb structured body of the present invention, the filtration area is made larger so that in capturing PMs, presumably, the pressure loss can be further lowered. Moreover, the irregularities allow the exhaust gas flow to form a turbulent flow, making it possible to reduce the temperature difference in the filter and consequently to prevent damages due to thermal stress.

Here, the shape of the above-mentioned cell in a plan view is not particularly limited to a square shape, and any desired shape, such as a triangular shape, a hexagonal shape, an octagonal shape, a dodecagonal shape, a round shape, an elliptical shape and a star shape, may be used.

With respect to the preferable aperture ratio of the honeycomb structured body according to the first aspect of the present invention, a lower limit is set to 30%, and an upper limit is set to 60%.
The aperture ratio of less than 30% tends to cause a high pressure loss when exhaust gases are allowed to flow in and out of the honeycomb structured body, and the aperture ratio of more than 60% tends to cause a reduction in the strength of the honeycomb structured body.

The honeycomb structured body according to the first aspect of the present invention is preferably designed to have a heat-resistant temperature of 1200°C or more.
The heat-resistant temperature of less than 1200°C tends to cause a breakage such as melting down in the honeycomb structured body when a regenerating process is carried out especially in burning a large amount of PMs at one time.

The following description will discuss a lamination member for an end portion that is used for sealing one of the ends of each of the cells formed in the honeycomb structured body according to the first aspect of the present invention.

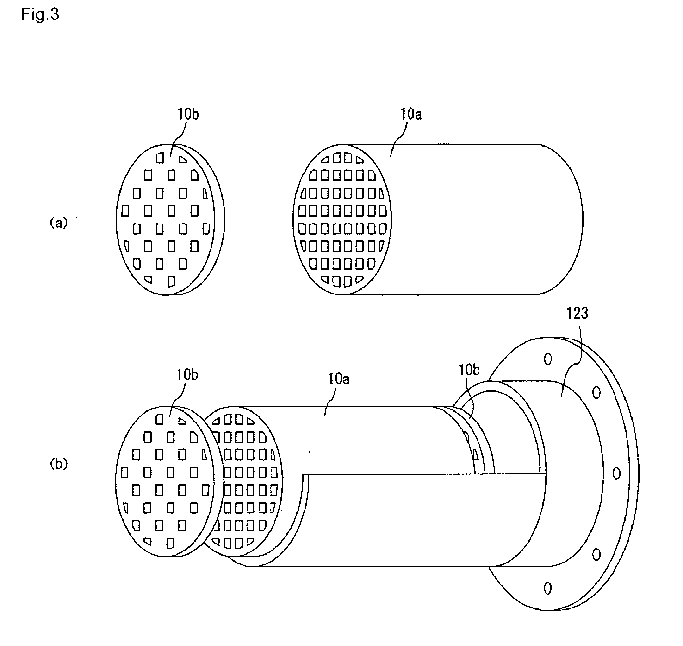

Fig. 3(a) is a perspective view that illustrates a honeycomb structured body and a lamination member for an end portion that form a honeycomb filter according to the sixth aspect of the present invention, and Fig. 3(b) is a perspective view that illustrates a state in which by laminating the honeycomb structured body and the lamination member for an end portion illustrated in Fig. 3(a), a honeycomb filter is manufactured.

The honeycomb filter according to the sixth aspect of the present invention is preferably formed by laminating a lamination member for an end portion 10b with through holes formed in a checkered pattern on each of the two sides of a honeycomb structured body 10a.
By laminating the lamination member for an end portion, either one of the ends of each of the cells can be sealed without the necessity of sealing the end portion of the cell by using a plug member.

The lamination member for an end portion is preferably comprises the same material as that of the honeycomb structured body with through holes being formed in a checkered pattern, or a plate member comprising a dense material with through holes being formed in a checkered pattern.
Here, in the present specification, the dense material refers to a material having a porosity smaller than that of the material forming the lamination members, and specific examples thereof include metal, ceramics and the like.
When the plate member comprising a dense material is used as the lamination member for an end portion, it becomes possible to make the lamination member for an end portion thinner.
With respect to the lamination member for an end portion, a material comprising a solid metal (dense metal) is preferably used.

In addition, the application of a plate member comprising a dense material as the lamination member for an end portion makes it possible to prevent soot from leaking through the sealed portion.

Moreover, in the case where a plate member comprising a metal lamination member or a solid metal (dense metal), with through holes being formed in a checkered pattern, is laminated on each of the two ends of the honeycomb structured body, it becomes possible to prevent wind erosion even after a long time use.

In the honeycomb filter according to the sixth aspect of the present invention, the following description will discuss a metal container in which a honeycomb structured body with either one of the ends of each of the cells being sealed, or the honeycomb structured body and the lamination member for an end portion mainly comprising metal can be installed.

With respect to the metal container, specifically, a cylindrical casing 123 having a pressing metal member attached to one of the sides, as illustrated in Fig. 3 (b), may be used.
Here, Fig. 3 (b) is a drawing that illustrates the casing 123, with the upper portion of its cylindrical portion forming the casing 123 being omitted, and the casing 123 has a cylindrical shape.
With respect to the material for the casing 123, examples thereof include, for example, metals such as stainless steel (SUS), aluminum and iron. Although the shape thereof is not particularly limited, it is preferable to use a shape that is similar to the outer shape of the honeycomb structured body to be installed therein.
With respect to the specific installation method using the casing 123, a description will be given in the section of the manufacturing method later.

The following description will discuss catalysts to be supported on the honeycomb structured body according to the first aspect of the present invention.
It is preferable to support a catalyst on at least one portion of the inorganic fibers of the honeycomb structured body according to the first aspect of the present invention. With respect to the kind of the catalyst, an oxide catalyst containing at least CeO₂ is preferably used.
The above described oxide is not particularly limited as long as it can lower the burning temperature of particulates, and examples thereof include CeO₂ ZrO₂ FeO₂, Fe₂O₃, CuO, CuO₂, Mn₂O₃, MnO and complex oxides indicated by a composition formula AₙB₁₋ₙCO₃, provided that in the formula, A is La, Nd, Sm, Eu, Gd or Y, B is an alkali metal or alkali-earth metal, and C is Mn, Co, Fe or Ni.
Each of these catalysts may be used alone, or two or more kinds of these may be used in combination; however, the catalyst preferably contains at least CeO₂.
By supporting such an oxide catalyst, the burning temperature of particulates can be lowered.

The amount of the supported catalyst is preferably set to 10 to 200 g/l (liter) with respect to the apparent volume of the honeycomb structured body.
The amount of the supported catalyst of less than 10 g/l tends to cause many portions of the honeycomb structured body in which no catalyst is supported, resulting in a reduction in the possibility of PMs coming into contact with the catalyst and the subsequent failure to sufficiently lower the burning temperature of PMs. In contrast, even when the amount thereof is more than 200 g/l, the possibility of contact between PMs and the catalyst is not improved so much.

The method for manufacturing the honeycomb structured body according to the first aspect of the present invention is not particularly limited, and various manufacturing methods may be used, and for example, the following methods for manufacturing the honeycomb structured body according to the second to fifth aspects of the present invention may be used.

The following description will discuss the method for manufacturing the honeycomb structured body of the second aspect of the present invention.
The method for manufacturing the honeycomb structured body according to the second aspect of the present invention is a method for manufacturing a honeycomb structured body according to the first aspect of the present invention comprising: mixing inorganic fibers A and inorganic fibers B and/or inorganic particles C that are melted at a temperature at which the inorganic fibers A are neither melted nor sublimated; extrusion-molding the mixture obtained by mixing the inorganic fibers A and the inorganic fibers B and/or the inorganic particles C, by using a die with predetermined holes formed therein to form a pillar-shaped molded body with a number of cells formed in the longitudinal direction; and carrying out a heating treatment on the molded body at a temperature of the heat-resistant temperature of the inorganic fibers A or less, and at a temperature of the softening temperature of the inorganic fibers B and/or the inorganic particles C or more.
In the present specification, the method for manufacturing the honeycomb structured body of the second aspect of the present invention is also referred to simply as "manufacturing method through the extrusion-molding".

The following description will discuss the above-mentioned method for manufacturing the honeycomb structured body according to the second aspect of the present invention in the order of processes.
First, the mixing process is carried out so that a mixture is prepared by mixing inorganic fibers A and inorganic fibers B and/or inorganic particles C that are melted at a temperature at which the inorganic fibers A are neither melted nor sublimated.

With respect to the inorganic fibers A, the same inorganic fibers as those listed in the description of the honeycomb structured body may be used, and at least one kind selected from the group consisting of silicon carbide, alumina, basalt, silica, silica-alumina, titania and zirconia is preferably used.
Thus, it becomes possible to manufacture a honeycomb structured body having a superior heat resistance.

The inorganic fibers B and/or the inorganic particles C are not particularly limited as long as they are melted at a temperature at which the above-mentioned inorganic fibers A are not melted, and specific examples of the inorganic fibers B include inorganic glass fibers comprising glass such as silicate glass, silicate alkali glass and borosilicate glass, and the like, and specific examples of the inorganic particles C include inorganic glass particles comprising glass such as silicate glass, silicate alkali glass and borosilicate glass, and the like.
Moreover, with respect to the inorganic fibers B and/or the inorganic particles C, those which are melted at a temperature less than the heat-resistant temperature of the inorganic fibers A are preferably used. These inorganic fibers B and/or the organic particles C are softened in the below-described heat treatment process to form inorganic matters in the honeycomb structured body of the first aspect of the present invention.

With respect to the fiber length of the inorganic fibers B, a preferable lower limit value is 0.1 mm, and a preferable upper limit value is 100 mm.
The fiber length of less than 0.1 mm makes it difficult to firmly fix the inorganic fibers A to one another by using an inorganic matter, sometimes failing to provide sufficient strength; in contrast, the fiber length of more than 100 mm makes it difficult to uniformly disperse the mixture in preparation thereof, with the result that, in heating in the post process, there might be a reduction in fixing portions at an intersection of the inorganic fibers A or in the vicinity thereof.
A more preferable lower limit is 0.5 mm, and a more preferable upper limit is 50 mm.

With respect to the fiber diameter of the inorganic fibers B, a preferable lower limit value is 0.3 µm, and a preferable upper limit value is 30 µm.
The fiber diameter of less than 0. 3 µm makes it difficult to mutually anchor the inorganic fibers A with one another by using the inorganic matter, failing to provide sufficient strength; in contrast, the fiber diameter of more than 30 µm tends to cause a reduction in fixing portions at an intersection of the inorganic fibers A or in the vicinity thereof.

With respect to the particle size of the inorganic particles C, a preferable lower limit is 1 µm, and a preferable upper limit is 100 µm.
The particle size of less than 1 µm requires the use of a coagulant, and makes it difficult to uniformly disperse the particles; in contrast, the particle size of more than 100 µm makes it difficult to uniformly disperse the mixture in preparation thereof, with the result that, upon heating in the post process, there might be a reduction in fixing portions at an intersection of the inorganic fibers A or in the vicinity thereof, due to the failure to uniformly disperse the inorganic fibers B and/or the inorganic particles C.

In mixing the inorganic fibers A and the inorganic fibers B and/or the inorganic particles C, the blending ratio (weight ratio) between the inorganic fibers A and the inorganic fibers B and/or the inorganic particles C preferably falls in the range of (2:8) to (8:2).
The blending ratio of the inorganic fibers A of less than (2:8) tends to cause the inorganic matter to be easily firmly fixed in a manner so as to coat the entire surface of each inorganic fiber, resulting in insufficient flexibility in the resulting honeycomb structured body; in contrast, the blending ratio of the inorganic fibers A exceeding (8:2) causes a reduction in the fixing portions between the inorganic fibers, resulting in insufficient flexibility in the resulting honeycomb structured body.

Here, in preparation of the mixture, a liquid medium such as water, and a dispersant may be added thereto, if necessary, so as to uniformly mix the inorganic fibers A and the inorganic fibers B and/or the inorganic particles C. Moreover, an organic binder may be added thereto. The addition of the inorganic binder allows the inorganic fibers A and the inorganic fibers B and/or the inorganic particles C to be surely entangled so that, even prior to a firing process, the inorganic fibers B and/or the inorganic particles C are made to be hardly drawn from the inorganic fibers A; thus, it becomes possible to more surely fix the inorganic fibers A to one another.

With respect to the organic binder, examples thereof include: an acrylic binder, ethyl cellulose, butyl cellosolve, polyvinyl alcohol and the like. One kind of these organic binders may be used, or two or more kinds of these may be used in combination. In addition, if necessary, a plasticizer, a lubricant, a molding auxiliary, a pore-forming agent and the like may be added thereto. With respect to the plasticizer and lubricant, those conventionally used may be applied.

The mixture, thus obtained, is preferably allowed to have such properties that the homogeneous composition is maintained for a long time and that the inorganic fibers and the like are prevented from precipitating, and the mixture is preferably allowed to have such viscosity that a predetermined shape can be maintained in the succeeding molding process.

Next, an extrusion process is carried out on the mixture obtained in the above-mentioned mixing process. In this extrusion process, it is continuously extruded by using a die with predetermined holes formed therein so that a pillar-shaped molded body with a number of cells formed in the longitudinal direction is formed.

The apparatus to be used in the present extrusion-molding process is not particularly limited, and for example, a single-axis screw-type extrusion-molding machine, a multi-axis screw-type extrusion-molding machine, a plunger-type molding machine and the like may be used.
Among these, in particular, the plunger-type molding machine is preferably used.
Although not limited by the following system, referring to the drawings, the following description will discuss a plunger-type molding machine to be used in the present process, and the application example thereof.

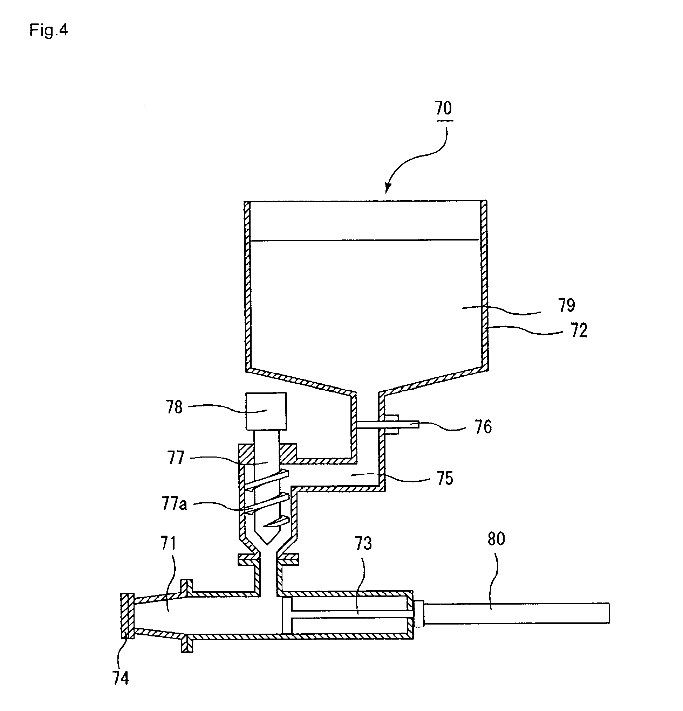

Fig. 4 is a cross-sectional view that schematically illustrates a plunger-type molding machine to be used for molding a pillar-shaped molded body.

This plunger-type molding machine 70 is formed by a cylinder 71, a piston 73 provided with a mechanism capable of reciprocally moving between the front side and the rear side in the cylinder (horizontal direction in the figure), a die 74 that is attached to the tip of the cylinder, and has holes formed therein so as to carry out an extrusion-molding process to form a pillar-shaped molded body with a number of cells formed in the longitudinal direction and a mixture tank 72, placed on the upper portion of the cylinder 71, to which a pipe 75 is connected from the cylinder 71. Moreover, a shutter 76 is placed right below the mixture tank 72 so that the charging operation of the mixture from the mixture tank 72 can be interrupted. Here, a screw 77 with blades 77a is attached to the pipe 75, and allowed to rotate by a motor 78. The size of the blade 77a is set to virtually the same as the diameter of the pipe so that the mixture 79 is hardly allowed to flow reversely. The mixture prepared in the above-mentioned mixing process is loaded into the mixture tank 72.

In manufacturing a molded body by using the plunger-type molding machine 70, first, the shutter 76 is opened, and the mixture, obtained in the mixing process, is charged into the cylinder 71 from the mixture tank 72 by rotating the screw. At this time, the piston 73 is moved to the end portion of the cylinder 71 on the right side in Fig. 4 according to the amount of the charge.
When the cylinder 71 is filled with the mixture, the shutter 76 is closed and the rotation of the screw 77 is simultaneously stopped. When the piston 73 is pressed and shoved into the die side with the inside of the cylinder 71 being filled with the mixture 79, the mixture is extruded through the die 74 so that a pillar-shaped molded body in which a plurality of cells are formed with a wall portion therebetween is continuously formed. At this time, according to the shape of the hole formed in the die, cells having the corresponding shape are formed. By repeating these processes, a molded body can be manufactured. Depending on the viscosity and the like, a molded body can be continuously manufactured, by rotating the screw 77 with the cylinder 73 being stopped. Here, in the plunger-type molding machine 70 illustrated in Fig. 4, an oil cylinder 80 is used as the driving source used for shifting the piston 73; however, an air cylinder may be used, or a ball screw or the like may also be used.

The shape of the cells to be formed through the extrusion-molding process can be desirably selected by changing the shape of holes to be formed in the die.
The shape on the vertical cross section of each of the cells is not particularly limited to a square shape, and any desired shape such as a triangular shape, a hexagonal shape, an octagonal shape, a dodecagonal shape, a round shape, an elliptical shape and a star shape may be used.

Moreover, honeycomb structured bodies having various outer shapes can be manufactured by changing the shape of the die. The vertical cross-sectional shape of the honeycomb structured body is not limited to a round shape, and various shapes such as a rectangular shape may be used; however, it is preferable to use a shape enclosed only by a curved line or by curved lines and straight lines, and in addition to a round shape. Specific examples thereof include a rectangular pillar shape, an elongated round shape (racetrack shape), a shape in which one portion of a simple closed curved line such as a rectangular pillar shape or a racetrack shape has a recess portion (concave shape), and the like.

Next, a heating treatment process is carried out on the molded body obtained in the above-mentioned extrusion-molding process. In this heating treatment process, it is heated at a temperature of the heat-resistant temperature of the inorganic fibers A or less and the softening temperature of the inorganic fibers B and/or the inorganic particles C or more; thus, a honeycomb structured body, mainly comprising inorganic fibers, with the inorganic fibers being integrally formed, is obtained.

By carrying out this heating treatment, a honeycomb structured body can be manufactured in which the inorganic fibers A are firmly fixed to one another through an inorganic matter comprising the same material as the inorganic fibers B and/or the inorganic particles C, and most of the firmly fixed portions are placed near the intersection of the inorganic fibers A or in the vicinity thereof, with the inorganic matter comprising the same material as the inorganic fibers B and/or the inorganic particles C being locally placed near the intersection or in the vicinity thereof.
Here, the heating temperature is appropriately determined by taking into consideration the combination of the inorganic fibers A and the inorganic fibers B and/or the inorganic particles C.
Examples of the heat-resistant temperature of the inorganic fibers A are given as follows: alumina > 1300°C, silica > 1000°C, silicon carbide > 1600°C, and silica-alumina > 1200°C.

The specific heating temperature is not unconditionally determined because it depends on the heat-resistant temperature and softening temperature of the inorganic fibers and the inorganic particles, and it is preferably set to 900 to 1050°C in the case where inorganic glass is used as the inorganic fibers B and/or the inorganic particles C.
This temperature range is set because the heating temperature of less than 900 °C tends to cause a failure in firmly fixing the inorganic fibers to one another, although certain portions of the surfaces of the inorganic fiber are firmly fixed to one another, and because the heating temperature of more than 1050°C tends to cause cracks on the fixed inorganic matter.

Additionally, prior to the heating treatment process, it is preferable to carry out a cutting process for cutting the extruded molded body into a predetermined length, a drying process for removing moisture from the molded body and a degreasing process for removing inorganic matters from the molded body.

The cutting member to be used in the cutting process is not particularly limited, and for example, a cutter having a blade formed in the cutting portion, a laser beam, a linear member, or the like may be used. Moreover, a cutter that uses a rotary disc for cutting may also be used.

Moreover, another preferable cutting method is proposed in which to the end to which the molded body molded in the extrusion-molding process is transferred, a molded body cutting machine provided with a cutting means such as a laser and a cutter is installed, and while the cutting means is being transferred at a speed synchronous to the extruding speed of the molding body, the molded body is cut by the cutting means.
By using the cutting apparatus having the above-mentioned mechanism, it is possible to carry out the cutting process continuously, and consequently to improve the mass productivity.

With respect to the drying apparatus used for the drying process, although not particularly limited, for example, a microwave heat drying apparatus, a hot-air drying apparatus, an infrared ray drying apparatus or the like may be used, and a plurality of these apparatuses may be used in combination.

For example, in the case of using a hot-air drying apparatus, the drying process is preferably carried out at a set temperature in the range of 100 to 150°C for 5 to 60 minutes under the atmospheric condition. In this case, the arrangement is preferably made so that the hot air is directed to the molded body in parallel with the longitudinal direction thereof so as to allow the hot air to pass through the cells. By allowing the hot air to pass through the cells of the molded body, the drying process of the molded body is carried out efficiently.

Normally, the degreasing process is preferably carried out in an oxidizing atmosphere such as normal atmosphere so as to oxidatively decompose the organic substances. With respect to the degreasing furnace, not particularly limited, a batch-type degreasing furnace may be used; however, in order to continuously carry out the process, a continuous furnace provided with a belt conveyor is preferably used. The degreasing process is preferably carried out by conducting a drying process at a set temperature in the range of 200 to 600 °C under normal atmosphere for 1 to 5 hours.

In the method for manufacturing the honeycomb structured body according to the second aspect of the present invention, an acid treatment may be carried out on the pillar-shaped molded body manufactured through the above-mentioned method.
By carrying out the acid treatment, the heat resistance of the molded body can be improved.
The acid treatment is carried out by immersing the molded body in a solution such as a hydrochloric acid solution and a sulfuric acid solution.

With respect to the conditions of the acid treatment, in the case where inorganic glass is used as the inorganic matter, the concentration of the treatment solution is preferably set in the range of 1 to 10 mol/l, the treating time is preferably set to 0.5 to 24 hours, and the treatment temperature is preferably set in the range of 70 to 100°C.
By carrying out the acid treatment under these conditions, components other than silica are eluted so that the heat resistance of the molded body is consequently improved.

The above-mentioned acid treatment process may be carried out during heating treatment processes. More specifically, the following processes are preferably carried out: a primary firing process is carried out at 950°C for 5 hours, and the acid treatment is then carried out, and a heating treatment is again carried out at 1050°C for 5 hours as a secondary firing process. These processes further improve the heat resistance of the molded body.

Moreover, the method for manufacturing the honeycomb structured body according to the second aspect of the present invention preferably includes a process used for supporting an oxide catalyst on the above-mentioned inorganic fibers.

In supporting the catalyst, an oxide catalyst may be preliminarily supported on inorganic fibers such as alumina fibers, which are constituent materials. By supporting the catalyst on the inorganic fibers prior to the molding process, the catalyst can be adhered thereto in a more uniformly dispersed state.
With respect to the kind of the oxide catalyst, the same catalysts as those supported on the honeycomb structured body described earlier may be used.
With respect to the method for supporting the oxide catalyst on the inorganic fibers, for example, a method in which, after inorganic fibers have been immersed in a slurry containing the oxide catalyst, the resulting inorganic fibers are taken out and heated, and the like are proposed.

Another method, in which, after the above-mentioned pillar-shaped molded body has been produced through the above-mentioned processes, the pillar-shaped molded body is immersed in the slurry containing the oxide catalyst, and then taken out, so that the resulting molded body is heated, and the like are proposed.

The following description will discuss a method for manufacturing a honeycomb structured body according to the third aspect of the present invention.
The method for manufacturing the honeycomb structured body according to the third aspect of the present invention is a method for manufacturing a honeycomb structured body according to the first aspect of the present invention comprising: mixing inorganic fibers A and inorganic fibers B and/or inorganic particles C that are melted at a temperature at which the inorganic fibers A are neither melted nor sublimated, as well as resin; installing vertically a plurality of pillar-shaped cores in a can-type (cylindrical) container in a manner so as to make the long axis direction of the pillar-shaped cores used for forming cells in the honeycomb structured body in parallel with the longitudinal direction of the can-type (cylindrical) container that is filled in with the mixture obtained by mixing the inorganic fibers A and the inorganic fibers B and/or the inorganic particles C, as well as in a manner so as to form a lattice pattern in a plan view; filling the above-mentioned mixture into the can-type (cylindrical) container in which the cores are vertically installed; curing the resin in the mixture filled into the can-type (cylindrical) container to form a cured resin body; forming a pillar-shaped molded body in which a number of cells have been formed in the longitudinal direction, by removing the cores from the cured resin body; removing organic substances contained in the molded body in which a number of cells have been formed in the longitudinal direction, by using a heat-degreasing operation; and carrying out a heating treatment of the molded body that has been degreased, at a temperature of the heat-resistant temperature of the inorganic fibers A or less, and at a temperature of the softening temperature of the inorganic fibers B and/or the inorganic particles C or more.
In the present specification, the method for manufacturing the honeycomb structured body of the third aspect of the present invention is also referred to simply as "manufacturing method by resin-curing (vertical installation of cores)."
Here, the core refers to a mold which, in forming a molded product (corresponding to the honeycomb structured body in the present invention) having hollow (empty) portions (corresponding to cells in the present invention), is inserted to a portion to form each of the hollow (empty) portions.

Referring to the drawings, the following description will discuss the method for manufacturing the above-mentioned honeycomb structured body according to the third aspect of the present invention.

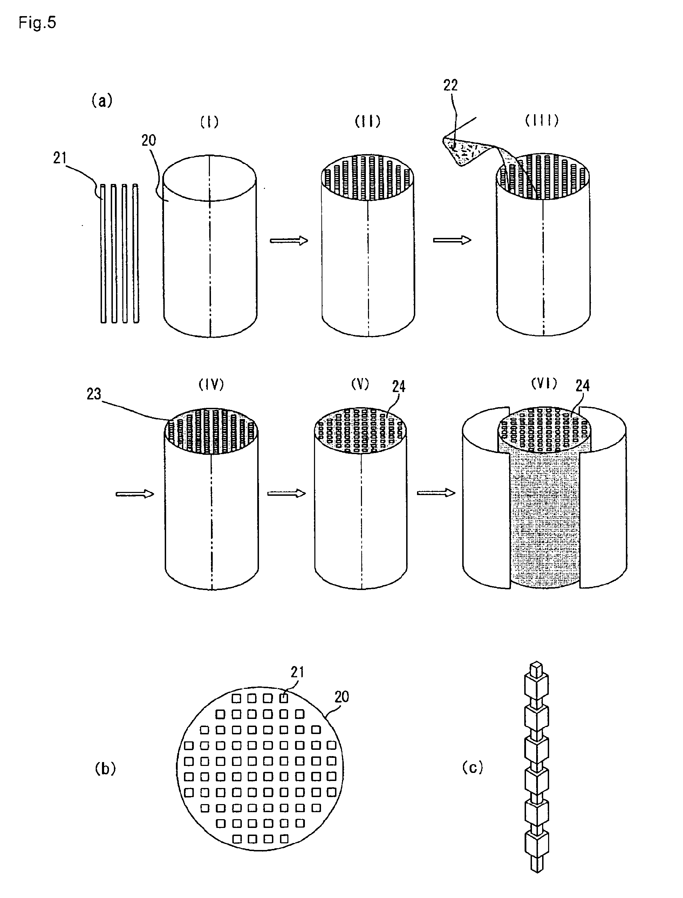

Figs. 5 (a) (I) to (VI) are drawings that schematically illustrate processes from the process of vertical installation of cores to the core removing process in the manufacturing processes for the honeycomb structured body of the third aspect of the present invention; Fig. 5(b) is a top view that illustrates a state in which the cores are installed vertically in the can-type (cylindrical) container; and Fig. 5(c) is a perspective view that illustrates one example of the shape of a core having a step difference.

(1) First, prior to process (I) illustrated in Fig. 5 (a), the mixing process is carried out so that inorganic fibers A and inorganic fibers B and/or inorganic particles C that are melted at a temperature at which the inorganic fibers A are neither melted nor sublimated, are mixed with a thermosetting resin.
In the present invention, the inorganic fibers A, inorganic fibers B and inorganic particles C are the same as those used in the method for manufacturing the honeycomb structured body according to the second aspect of the present invention; therefore, the description thereof is omitted, and in this case, resin is preferably added to the inorganic matter. By curing the resin, a cured resin body can be formed, and the resin is removed in the succeeding degreasing process and a heat treatment is further carried out on the resulting body so that it becomes possible to manufacture a honeycomb structured body comprising inorganic fibers.
With respect to the above-mentioned resin, although not particularly limited, a thermosetting resin is preferably used. With respect to the kind of the thermosetting resin, although not particularly limited, for example, an epoxy resin, a phenol resin, a polyester resin, a urea resin, a melamine resin, or the like can be used. Among these, the epoxy resin is more preferably used because of its low shrinkage rate in curing.

Moreover, upon preparation of the mixture, by adding a solvent and a dispersant on demand, the inorganic fibers A and the inorganic fibers B and/or the inorganic particles C can be mixed more uniformly.

(2) Next, the process of vertical installation of cores is carried out.
A can-type (cylindrical) container 20 and a plurality of pillar-shaped cores 21 are prepared (see (I) in Fig. 5 (a)), and the cores 21 are installed vertically in the can-type (cylindrical) container 20 with their long axis direction being in parallel with the longitudinal direction of the can-type (cylindrical) container 20 (see (II) of Fig. 5(a)).
In this case, as illustrated in Fig. 5 (b), the cores 21 are preferably arranged in a lattice pattern in a plan view. Here, with respect to the cores, in addition to core sand for use in casting that is desirably used, a resin material, low-melting-point metal, water-soluble salts on which a high-pressure press-molding process has been carried out, or the like may also be used.

(3) Next, the mixture-filling process is carried out.
The mixture 22, obtained in the mixing process, is poured into the can-type (cylindrical) container 20 so that the can-type (cylindrical) container is filled with the mixture (see (III) in Fig. 5 (a)) . In the case where the resin is cured by using a curing agent in the succeeding resin curing process, the curing agent is added to the mixture immediately before the filling process of the mixture, the mixture-filling process is then carried out.
The kind of the curing agent is determined according to the kind of the resin.

(4) Next, the resin-curing process is carried out.
With respect to the curing method of the resin, although not particularly limited, in the case where a curing agent has been added prior to the mixture-filling process, the resin is cured by the function of the curing agent so that a cured resin body 23 is formed (see (IV) in Fig. 5(a)).
Moreover, in the case where a thermosetting resin is used without adding the curing agent, by heating the thermosetting resin to the curing temperature of the thermosetting resin or more, a cured resin body 23 is formed. The heating temperature should be determined depending on the kind of the thermosetting resin to be used, and it should be set to a temperature of the heat-resistant temperature of the cores or less. This arrangement is made because, when the cores are thermally deformed prior to the curing process of the thermosetting resin, it is not possible to form cells having a desired shape.

(5) Next, the core removing process is carried out.
By removing the cores, cells are formed in portions that have been occupied by the cores, and these are allowed to form cells of the honeycomb structured body (see (V) in Fig. 5 (a)) .
The method for removing the cores is not particularly limited, and for example, methods, such as a washing/elution method, a burning method, a thermal-fusing method, may be used, and an appropriate removing method can be used depending on the kind of the cores that have been installed vertically.
For example, when core sand and water-soluble salts on which a high-pressure press-molding process is carried out are used as the cores, the cores can be physically broken or warm water is swiftly thrown over the core portions so that the cores can be washed away or eluted.
Moreover, in the case where a resin material is used as the cores, by carrying out a firing process at a high temperature, the cores can be burned away. This firing process may be carried out in combination with the firing process to be carried out later.
Moreover, in the case where metal having a low-melting point is used as the cores, by heating the cores at a temperature of the melting point thereof or more, the cores can be thermally melted and allowed to come out.

The shape of cells to be formed in the present invention may be designed into a desired shape by changing the shape of the cores.
Here, the shape on the vertical cross section of each of the cells is not particularly limited to a square shape, and any desired shape such as a triangular shape, a hexagonal shape, an octagonal shape, a dodecagonal shape, a round shape, an elliptical shape and a star shape may be used.

Here, in the case where a core having a step difference as illustrated in Fig. 5(c) is used, a cell having irregularities on the surface of its wall portion in the honeycomb structured body can be formed. By forming the irregularities on the surface of its wall portion, it is possible to increase the filtration area, and consequently to reduce the pressure loss in capturing particulates. Moreover, the irregularities allow the exhaust gas flow to form a turbulent flow, making it possible to reduce the temperature difference in the filter and consequently to prevent damages such as cracks due to thermal stress.

By removing the can-type (cylindrical) container before or after the core removing process, a pillar-shaped molded body 24 is formed (see (VI) of Fig. 5(a)).
Moreover, honeycomb structured bodies having various outer shapes can be manufactured by changing the shape of the can-type (cylindrical) container. The vertical cross-sectional shape of the honeycomb structured body is not limited to a round shape, and various shapes such as a rectangular shape may be used; however, it is preferable to use a shape enclosed only by a curved line or by curved lines and straight lines, and in addition to a round shape, specific examples thereof include a rectangular pillar shape, an elongated round shape (racetrack shape), and a shape in which one portion of a simple closed curved line such as a rectangular pillar shape or a racetrack shape has a recess portion (concave shape), and the like.

Next, the degreasing process for removing the resin from the molded body is carried out.
With respect to the specific method thereof, the detailed description will be omitted since the same process as the aforementioned degreasing process is carried out; thus, a degreased molded body can be obtained.

Thereafter, a honeycomb structured body can be manufactured by using the same method as that used for manufacturing the honeycomb structured body according to the second aspect of the present invention. Therefore, the specific description thereof will be omitted.

The following description will discuss a method for manufacturing the honeycomb structured body according to the fourth aspect of the present invention.
A method for manufacturing the honeycomb structured body according to a fourth aspect of the present invention is a method for manufacturing a honeycomb structured body according to the first aspect of the present invention comprising: mixing inorganic fibers A and inorganic fibers B and/or inorganic particles C that are melted at a temperature at which the inorganic fibers A are neither melted nor sublimated, as well as resin; filling the mixture, obtained by mixing the inorganic fibers A and the inorganic fibers B and/or the inorganic particles C, into a frame member , which is formed by a bottom plate on which pillar members used for forming cells of the honeycomb structured body are installed vertically to the main surface in a lattice pattern in a plan view and an outer frame member formed so as to enclose the periphery of the bottom plate and the pillar member; curing the resin in the mixture filled in to form a cured resin body; removing the pillar members from the cured resin body and detaching the entire frame to form a pillar-shaped molded body in which a number of cells have been formed in the longitudinal direction ; removing organic substances contained in the pillar-shaped molded body in which a number of cells have been formed, by using a heat-degreasing operation; and carrying out a heating treatment of the molded body that has been degreased, at a temperature of the heat-resistant temperature of the inorganic fibers A or less, and at a temperature of the softening temperature of the inorganic fibers B and/or the inorganic particles C or more.
In the present specification, the method for manufacturing the honeycomb structured body of the fourth aspect of the present invention is also referred to simply as "manufacturing method through the resin-curing (metal molding)."

Referring to part of the drawings, the following description will discuss the above-mentioned method for manufacturing the honeycomb structured body according to the third aspect of the present invention; however, since the method includes many processes that are the same as those of the aforementioned third aspect of the present invention, those processes that are different will be mainly described.

(1) First, the mixing process is carried out.
The present mixing process can be carried out in the same manner as in the third aspect of the present invention; therefore, the detailed description thereof is omitted:

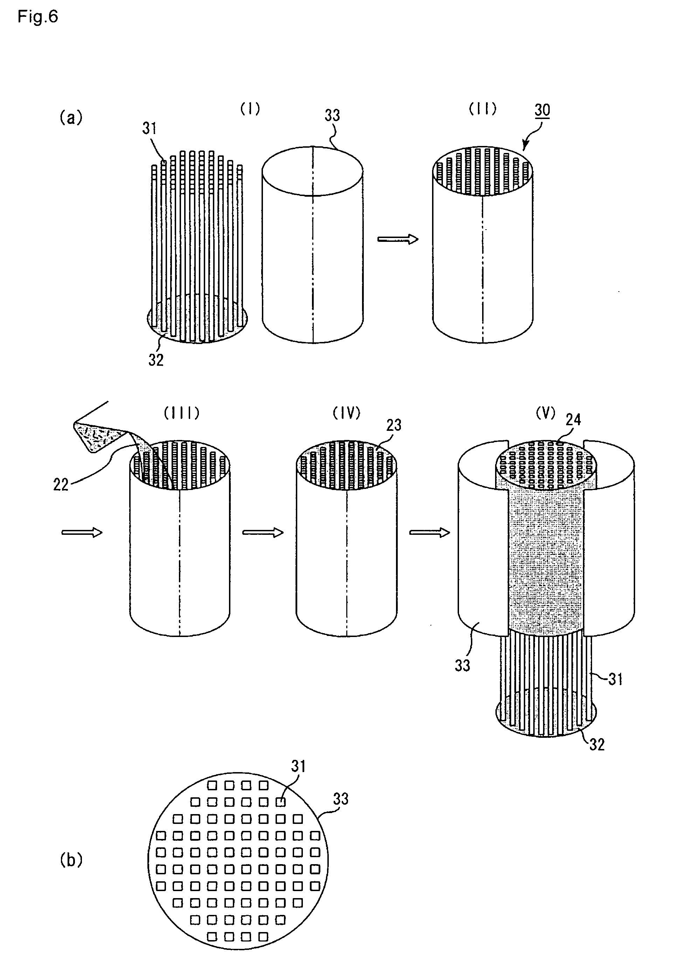

Figs. 6(a) (I) to (V) are drawings that schematically illustrate processes from the mixture-filling process to the frame-removing process, in the manufacturing processes of the honeycomb structured body according to the fourth aspect of the present invention, and Fig. 6 (b) is a top view that illustrates a state in which cores are installed vertically inside the frame member.

(2) Next, the mixture-filling process is carried out.
As the frame member to be filled in with the mixture, a frame member 30 (see (II) of Fig. 6(a)) is formed by a bottom plate 32 (see (I) in Fig. 6(a) and Fig. 6(b)) on which pillar members 31 used for forming cells of the honeycomb structured body are installed vertically to the main surface in a lattice pattern in a plan view, and an outer frame member 33 (see (I) of Fig. 6 (a)) formed so as to enclose the periphery of the bottom plate 32 and the pillar members 31. The frame member may be integrally formed, or may be formed as parts that can be separated and combined.
The material for the respective parts forming the frame member is preferably prepared as metal. Thus, the frame member is allowed to have a high heat resistance so as to be suitable for a structure in which the curing process of resin is carried out by heating, and made to be easily separable from the cured resin body.
Next, the frame member 30 is filled in with a mixture 22 (see (III) of Fig. 6(a)). This process is carried out in the same manner as in the third aspect of the present invention except that the container to be filled in is different; therefore, the detailed description thereof is omitted (see (IV) of Fig. 6(a)).

(3) Next, the resin-curing process is carried out.
Since this resin-curing process is carried out in the same manner as the third aspect of the present invention, the detailed description thereof is omitted (see (IV) of Fig. 6 (a)) .

(4) Next, the frame-member removing process is carried out.
By removing the pillar members, cells are formed in portions that have been occupied by the pillar members, and these are allowed to form cells for the honeycomb structured body (see (V) in Fig. 6(a)).
In this case, it is preferable to preliminarily form a draft angle of about 2° in each pillar member 31 so that the pillar members 31 can be easily drawn from the cured resin body 23.
Moreover, the outer frame member 33 is separately detached so that a pillar-shaped molded body 24 is formed.
Here, the frame member can be used repeatedly.

In the same manner as in the third aspect of the present invention, by changing the shapes of the pillar members and the outer frame member, honeycomb structured bodies having various cell shapes and outer shapes can be manufactured.
Different from the third aspect of the present invention, however, it is not possible to form cells with irregularities formed on the surface of each wall portion of the honeycomb structured body.

Thereafter, by using the same method for manufacturing the honeycomb structured body according to the third aspect of the present invention, a honeycomb structured body can be manufactured. Therefore, the detailed description thereof will be omitted.

The method for manufacturing the honeycomb structured body according to the fifth aspect of the present invention is a method for manufacturing a honeycomb structured body according to the first aspect of the present invention, and is performed by using a vessel that includes a vessel main body; a mesh formed on the bottom portion of the vessel main body; pillar-shaped masks that are installed vertically on the mesh perpendicularly and in a lattice pattern in a plan view, and are used for forming cells of the honeycomb structured body; and a liquid-filling unit that forms each space surrounded by the pillar-shaped masks, with the mesh serving as the bottom face, into which the mixture is charged, comprising: mixing inorganic fibers A and inorganic fibers B and/or inorganic particles C that are melted at a temperature at which the inorganic fibers A are neither melted nor sublimated; charging the mixture obtained by mixing the inorganic fibers A and the inorganic fibers B and/or the inorganic particles C, into the liquid-filling unit; discharging moisture from the mixture through the mesh so that a dehydrated body is formed; removing the pillar-shaped masks from the dehydrated body to form a pillar-shaped molded body having a number of cells formed in the longitudinal direction; and carrying out a heating treatment of the pillar-shaped molded body in which a number of cells have been formed, at a temperature of the heat-resistant temperature of the inorganic fibers A or less, and at a temperature of the softening temperature of the inorganic fibers B and/or the inorganic particles C or more.
In the present specification, the method for manufacturing the honeycomb structured body of the fifth aspect of the present invention is also referred to simply as "manufacturing method through the three-dimensional sheet-forming process."

Referring to the drawings in some parts, the following description will discuss the above-mentioned method for manufacturing the honeycomb structured body according to the fifth aspect of the present invention.
First, referring to the drawings, the vessel to be used in the fifth aspect of the present invention will be described. Here, the present invention is not limited to the vessel of the kind described below, the description will be given as one example.

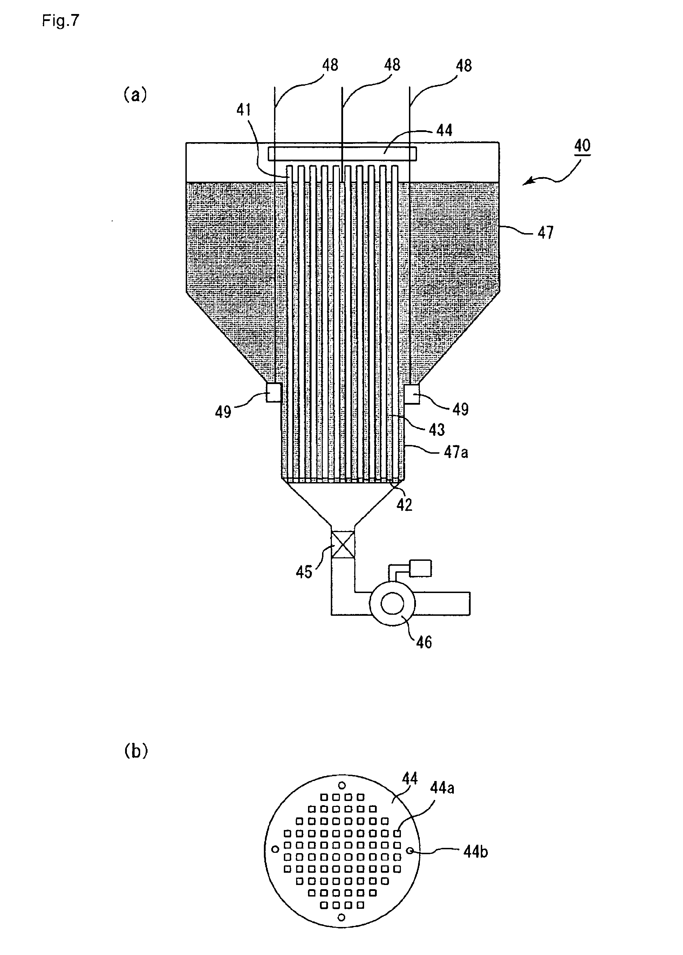

Fig. 7 (a) is a drawing that schematically illustrates a vessel to be used in the manufacturing process for the honeycomb structured body of the fifth aspect of the present invention, and Fig. 7(b) is a top view that schematically illustrates a pressing plate to be used for a pressing process.

This vessel 40 is configured by a vessel main body 47; a mesh 42 formed on the bottom portion of the vessel main body; pillar-shaped masks 41 that are installed vertically to the mesh 42 and in a lattice pattern in a plan view, and are used for forming cells of the honeycomb structured body; and a liquid-filling unit 43 that forms each space surrounded by the pillar-shaped masks 41, with the mesh 42 serving as the bottom face, into which the mixture is charged.

Moreover, the vessel 40 may be provided with a pressing plate 44 with through holes 44a having a lattice pattern formed in portions corresponding to the pillar-shaped masks 41, a cock 45 and a pump 46 used for draining, a press driving unit used for press-inserting the pressing plate 44 onto the vessel main body and a vibration unit, not illustrated, used for giving vibration to the vessel main body.

In manufacturing a honeycomb structured body by using the vessel 40 having the above-mentioned structure, the above-mentioned mixing process, mixture-filling process, dehydration process, mask-removing process and heating treatment process are carried out.
Moreover, a stirring process and/or a pressing process may be carried out on demand.
The following description will discuss the respective processes.

(1) First, the mixing process is carried out in which inorganic fibers A and inorganic fibers B and/or inorganic particles C that are melted at a temperature at which the inorganic fibers A are neither melted nor sublimated, as well as water, are mixed with one another.
In the present invention, the inorganic fibers A, the inorganic fibers B and the inorganic particles C are the same as those used for the method for manufacturing the honeycomb structured body according to the second aspect of the present invention; therefore, the detailed description thereof is omitted, and in this case, a large amount of water is preferably added to the inorganic matter so as to lower the viscosity of the mixture to such a level as to be applicable to a sheet-forming process.

In preparation of the mixture, by adding a dispersant thereto, if necessary, the inorganic fibers A and the inorganic fibers B and/or the inorganic particles C may be mixed uniformly. Moreover, an organic binder may be added thereto. The addition of the inorganic binder allows the inorganic fibers A and the inorganic fibers B and/or the inorganic particles C to be surely entangled so that, even prior to a firing process, the inorganic fibers B and/or the inorganic particles C are hardly drawn from the inorganic fibers A; thus, it becomes possible to more surely fix the inorganic fibers A to one another.
Moreover, a pore-forming agent may be added thereto, if necessary.

(2) Next, the mixture-filling process in which the mixture, obtained in the mixing process, is charged into the liquid-filling unit 43 is carried out. Here, the mixing process may be carried out in the vessel 40.

After the mixture-filling process, a stirring process may be carried out, in which the mixture filled into the liquid-filling unit 43 is stirred. The stirring process may be carried out by activating a vibration unit, not illustrated, used for giving vibration to the vessel main body. With respect to the specific vibration unit, for example, an oscillator provided with an ultrasonic resonator, a vibrator and the like may be used, and the unit may be installed on the side face of the vessel main body 47. This may also be installed in the vessel main body 47. The mixture is uniformly stirred by this stirring process.

(3) Next, a dehydration process in which moisture in the mixture is sucked so that water in the mixture is drained through the mesh 42 is carried out.
In this case, the cock 45 placed on the lower side of the mesh 42 is opened, and the pump 46 is actuated. Thus, the mixture, filled into the liquid-filling unit 43, is sucked and filtered, and allowed to drop through the mesh 42, and drained through the cock 45. Consequently, the water contained in the mixture has been dehydrated so that a dehydrated body having a predetermined height from the bottom portion of the liquid-filling unit is formed.

After the dehydration process, the dehydrated body that has been dehydrated in the above-mentioned dehydration process may undergo a pressing process in which it is compressed by the pressing plate from the upper face. By carrying out the compressing process by applying a pressure thereto, a compressed body having a predetermined length, appropriate density and porosity, can be formed.

The apparatus and the method used for the pressing process are not particularly limited to those described below, and a vessel 40, illustrated in Fig. 7(a), is provided with motors 49 and four ball screws 48 coupled to the motors 49 that serve as a press driving unit, and the four ball screws 48 are threaded with four screw holes 44b formed in a pressing plate 44; thus, the four ball screws 48 rotate in synchronism with one another so that the pressing plate 44 is raised and lowered.
Moreover, the pressing plate 44 is prepared as a plate, as illustrated in Fig. 7(b), with through holes being formed in a lattice pattern in portions corresponding to the pillar masks 41.

When the four motors 49 are driven in synchronism with one another, the pressing plate 44 is lowered downward so that the dehydrated body is compressed in the portion corresponding to the lower portion 47a of the vessel main body to be formed into a compressed body. As illustrated in Fig. 7 (a), the lower portion 47a of the vessel main body has a shape corresponding to a honeycomb structured body so that when the pressing plate 44 is lowered to a portion at which the motors 49 are placed, a compressed body having a cylindrical shape is formed.
Here, the lower portion 47a of the vessel main body has a cylindrical shape, and the dehydrated body is compressed by the pressing plate 44, and filled into the lower portion 47a of the vessel main body to be formed in the shape of the honeycomb structured body. Therefore, by changing the shape of the lower portion 47a of the vessel main body, the shape of the honeycomb structured body can be changed.

(4) Next, by removing the pillar-shaped masks from the dehydrated body, the mask-removing process is carried out to form a pillar-shaped molded body with a number of cells formed in the longitudinal direction. Thus, a pillar-shaped molded body having cells with a predetermined shape and predetermined length and density can be obtained.

The shape of each of the cells to be formed in the present invention can be formed in a desired shape by changing the shape of the pillar-shaped masks.
The shape on the vertical cross section of each of the cells is not particularly limited to a square shape, and any desired shape such as a triangular shape, a hexagonal shape, an octagonal shape, a dodecagonal shape, a round shape, an elliptical shape and a star shape may be used.

Moreover, honeycomb structured bodies having various outer shapes can be manufactured by changing the shape of the vessel main body 47. The vertical cross-sectional shape of the honeycomb structured body is not limited to a round shape, and various shapes such as a rectangular shape may be used; however, it is preferable to use a shape enclosed only by a curved line or by curved lines and straight lines, and in addition to a round shape, and specific examples thereof include a rectangular pillar shape, an elongated round shape (racetrack shape) and a shape in which one portion of a simple closed curved line, such as a rectangular pillar shape or a racetrack shape, has a recess portion (concave shape). By forming the shape of the vessel main body 47 in a plan view into the above-mentioned shape, a honeycomb structured body having the above-mentioned shape in the cross-sectional shape perpendicular to the cells can be manufactured.

Thereafter, in the same manner as in the method for manufacturing the honeycomb structured body according to the second to fourth aspects of the present invention, a honeycomb structured body can be manufactured. Therefore, the detailed description thereof will be omitted.

The following description will discuss a method for manufacturing a honeycomb filter according to the seventh aspect of the present invention.
The method for manufacturing the honeycomb filter according to the seventh aspect of the present invention comprises laminating a lamination member for an end portion mainly comprising metal on each of the two ends of the honeycomb structured body manufactured through the method for manufacturing any of the second to fifth aspects of the present invention.
The method for manufacturing the honeycomb filter according to the seventh aspect of the present invention preferably comprises installing the honeycomb structured body and the lamination member for an end portion mainly comprising metal in a metal container.

In the method for manufacturing the honeycomb filter of the present invention, by laminating the honeycomb structured body manufactured by any of the manufacturing methods according to the second to fifth aspects of the present invention and the lamination member for an end portion, a honeycomb filter, which has cells with either one of the ends being sealed and functions as a filter, can be manufactured.
More specifically, as illustrated in Fig. 3 (b), by using a can-type (cylindrical) casing 123 (metal container) with a pressing metal member on one side, after a lamination member 10b for an end portion has been first laminated in the casing 123, a honeycomb structured body 10a, manufactured through any of the manufacturing methods according to the second to fifth aspects of the present invention, is installed. Lastly, the lamination member 10b for an end portion is laminated, and a pressing metal member is also attached and fixed thereto on the other side thereof so that the honeycomb structured body on which processes up to a canning process are carried out can be manufactured. With respect to the material for the casing, for example, metal materials such as stainless steel (SUS), aluminum and iron may be used. Although not particularly limited, the shape thereof is preferably a shape similar to the outer shape of the honeycomb structured body to be housed.

With respect to the lamination member for an end portion, a lamination member for an end portion comprising metal with predetermined through holes is preferably laminated. Thus, a honeycomb filter having a structure in which the lamination members for end portion mainly comprising metal are laminated on both of the ends of the honeycomb structured body can be manufactured.

With respect to the lamination member for an end portion, a lamination member for an end portion comprising inorganic fibers may be laminated, and the lamination member for an end portion comprising inorganic fibers may be manufactured through processes in which a honeycomb structured body having cells formed in a checkered pattern is manufactured by changing the shape of a hole formed in a die in the extrusion-molding process in the method for manufacturing the honeycomb structured body of the second aspect of the present invention, and the resulting honeycomb structured body is thinly cut in the cutting process.

The method for manufacturing the lamination member for an end portion comprising metal is described below.
First, a laser machining process or a punching process is carried out on a porous metal plate mainly comprising metal having a thickness of 0.1 to 20 mm so that a lamination member for an end portion with through holes formed in a checkered pattern is manufactured.

Next, an oxide catalyst is supported on the lamination member for an end portion, if necessary.
Examples of the method for supporting an oxide catalyst include, for example, a method in which a lamination member for an end portion is immersed in a solution that contains 10 g of CZ(nCeO₂·mZrO₂), 11 (liter) of ethanol, 5 g of citric acid and an appropriate amount of pH adjusting agent for 5 minutes, and a firing process is carried out at 500°C on the resulting product, and the like.
In this case, by repeating the above-mentioned immersing process and firing process, the amount of catalyst to be supported can be adjusted.
Here, the above-mentioned catalyst may be supported on one portion of the metal lamination member, or may be supported on the entire lamination member for an end portion.

The applications of the honeycomb structured body according to the first aspect of the present invention and the honeycomb filter according to the sixth aspect of the present invention are not particularly limited, and for example, it may be used for an exhaust-gas purifying apparatus for vehicles.

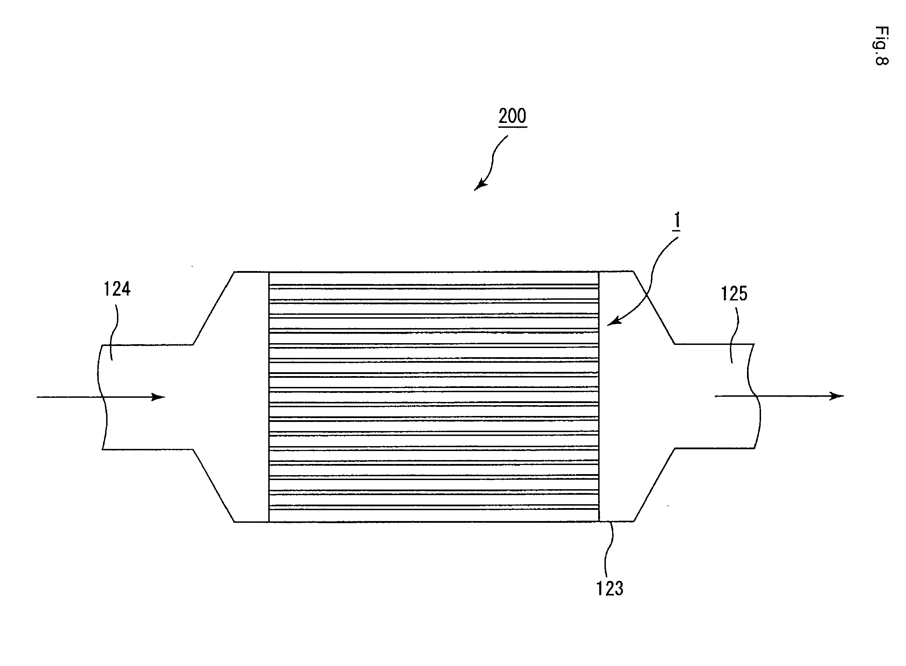

Fig. 8 is a cross-sectional view that schematically illustrates one example of an exhaust-gas purifying apparatus for vehicles in which the honeycomb filter according to the sixth aspect of the present invention is installed.

As illustrated in Fig. 8, an exhaust-gas purifying apparatus 200 has a structure in which: a casing 123 covers the outside of a honeycomb filter 1 according to the sixth aspect of the present invention, and an introducing pipe 124 coupled to an internal combustion engine such as an engine is connected to the end portion on the side of the casing 123 to which exhaust gases are introduced, and an exhaust pipe 125 coupled to the outside is connected to the other end portion of the casing 123. Here, arrows in Fig. 8 indicate flows of the exhaust gases.

In the exhaust-gas purifying apparatus 200 having the above-mentioned structure, exhaust gases discharged from the internal combustion engine such as an engine are introduced into the casing 123 through the introducing pipe 124, and allowed to pass through the wall portions (cell walls) of the honeycomb filter 1, and after particulates have been captured by the cell walls to purify the exhaust gases, the purified gases are discharged outside through the exhaust pipe 125.

After a large amount of particulates have been accumulated on the wall portions (cell walls) of the honeycomb filter 1 to cause a high pressure loss, a regenerating process is carried out on the honeycomb filter 1 so that the honeycomb filter 1 can be regenerated.

### EXAMPLES

The following description will discuss the present invention in more detail by Examples; however, the present invention is not limited only to these Examples.

(Example 1)
By using an extrusion-molding process as the method for manufacturing the honeycomb structured body, a honeycomb structured body was manufactured.
(1) Mixing process
First, 12.3 parts by weight of alumina fibers (average fiber length: 0.3 mm, average fiber diameter: 5 µm) comprising 72% of alumina and 28% of silica, 6.2 parts by weight of glass fibers (average fiber diameter: 9 µm, average fiber length: 3 mm), 11.7 parts by weight of an organic binder (methyl cellulose), 7.1 parts by weight of a pore-forming agent (acryl), 8.1 parts by weight of a plasticizer (UNILUB, made by NOF Corporation), 3.8 parts by weight of a lubricant (glycerin) and 50.9 parts by weight of water were mixed, and sufficiently stirred to prepare a mixture.

(2) Extrusion-molding process
The mixture, obtained in process (1), was charged into a cylinder from a mixture tank of a plunger-type extrusion-molding machine, and the piston is pressed toward the die side so that the mixture was extruded through the die to manufacture a cylindrical molded body (diameter of circle: 160 mm) with cells, each having a size of 4.5 mm × 4.5 mm, being formed with intervals of 2 mm in the longitudinal direction.

(3) Cutting process
The molded body having a cylindrical shape, obtained in process (2), was cut into a length of 60 mm by using a cutting apparatus having a cutting disc as its cutting member. Thus, a molded body having a size of 160 mm in diameter × 60 mm in length in the longitudinal direction was obtained.

(4) Drying process
The cylindrical molded body, obtained in process (3), was dried at 200°C for 3 hours under normal atmosphere by using a microwave drying apparatus and a hot-air drying apparatus so that moisture contained in the molded body was removed.

(5) Degreasing process
The cylindrical molded body, obtained in process (4), underwent a heating treatment at 400°C for 3 hours in an electric furnace under normal atmosphere so that organic substances contained in the molded body were removed.

(6) Heating treatment and acid treatment
The cylindrical molded body, obtained in process (5), underwent a heating treatment at 950°C for 5 hours in a firing furnace under normal atmosphere.
Thereafter, the resulting molded body was immersed into a HCl solution of 4 mol/l at 90°C for one hour so that it an acid treatment is carried out thereon, and this again underwent a heating treatment at 1050°C for 5 hours to manufacture a honeycomb structured body.

(7) Catalyst-supporting process
The honeycomb structured body obtained in process (6) was immersed in a solution containing 10 g of CZ (nCeO₂·mZrO₂), 40 ml of water and an appropriate amount of pH adjusting agent for 5 minutes, and a firing process is then carried out thereon at 500°C so that CeO₂ and ZrO₂ were supported thereon as oxide catalysts.

(8) Manufacturing process of lamination member for end portion
After a metal plate comprising Ni-Cr alloy had been machined into a disc shape having a size of 160 mm in diameter × 1 mm in thickness, a laser machining processes is carried out on this so that a lamination member for an end portion with holes of 4.5 mm × 4.5 mm formed in a checkered pattern was manufactured. Two lamination members for end portions were manufactured in this process, and holes were formed on these lamination members for end portions at respectively different positions so that sealed portions were made different between the end face on the inlet side and the end face on the outlet side of the honeycomb structured body when the lamination members for end portions were laminated in the following lamination process.

(9) Canning process
First, a casing (metal container) having a can-type (cylindrical) shape with a pressing metal member attached on one side was vertically placed with the side on which the member had been attached facing down. After one sheet of the lamination member for an end portion, obtained in process (8), had been laminated thereon, the honeycomb structured body, obtained in the above-mentioned process (7), was placed with the holes of the lamination member for an end portion being fitted to the positions of the cells of the honeycomb structured body, and lastly, one sheet of the lamination member for an end portion was laminated thereon, with the pressing metal member being attached to the other end and fixed thereon; thus, a honeycomb filter having a length of 60 mm was manufactured.
In this process, the lamination members for end portions were laminated in such a manner that sealed portions were made different between the end face on the inlet side and the end face on the outlet side of the honeycomb filter (so that only either one of the ends of the superposed cells was sealed).
Here, in the present canning process, one honeycomb structured body was placed in the casing, and the lamination members for end portions were laminated (placed) on the two ends. Supposing that this honeycomb structured body forms one lamination member, the state of the honeycomb filter after the completion of the present canning process corresponds to a state
in which the total three sheets of the lamination members including the lamination members for end portions are laminated and placed on the casing, and the honeycomb structured body thus integrally formed is referred to as one sheet of lamination member.

(Example 2)
By using a resin-curing process (process of vertical installation of cores) as the method for manufacturing the honeycomb structured body, a honeycomb structured body was manufactured.
(1) Mixing process
First, 14.0 parts by weight of alumina fibers (average fiber length: 0.3 mm, average fiber diameter: 5 µm) comprising 72% of alumina and 28% of silica, 7.1 parts by weight of glass fibers (average fiber diameter: 9 µm, average fiber length: 3 mm) and 78.9 parts by weight of a thermosetting resin (epoxy resin) were mixed, and sufficiently stirred to prepare a mixture.

(2) Process of vertical installation of cores and mixture-filling process
The mixture obtained in process (1) was poured into a can-type (cylindrical) container (inner diameter: diameter 160 mm × 60 mm in length in the longitudinal direction) in which pillar-shaped cores comprising core sand (4.5 mm × 4.5 mm × 60 mm) were vertically installed in a lattice pattern in a plan view with intervals of 2 mm; thus, the container was filled in with the mixture.

(3) Resin-curing process
The can-type (cylindrical) container, filled in with the mixture, obtained in process (2) underwent a heating treatment at 120°C for 30 minutes so that the epoxy resin was cured to form a cured resin body.

(4) Core removing process
The can-type (cylindrical) container was removed from the cured resin body, and by sticking the core portions by using a thin rod-shaped member, the cores were broken and removed from the cured resin body. Thus, a molded body having a size of 160 mm in diameter × 60 mm in length in the longitudinal direction was obtained.
Moreover, the processes of the drying process and thereafter were carried out in the same manner as in Example 1 so that a honeycomb structured body and a honeycomb filter were manufactured.

(Example 3)
A honeycomb structured body and a honeycomb filter were manufactured in the same manner as in Example 2, except that immediately after having preliminarily added 10 parts by weight of a curing agent for epoxy resin to the mixture, the mixture-filling process was carried out so that the epoxy resin was cured by the function of the curing agent, and that the heating treatment for curing resin was not carried out.

(Example 4)
A honeycomb structured body and a honeycomb filter were manufactured in the same manner as in Example 2, except that cores comprising polycarbonate (PC) were used and that the degreasing process of the epoxy resin and the removing process of the cores were simultaneously carried out by the heating process for the degreasing process after the formation of the cured body.

(Example 5)
A honeycomb structured body and a honeycomb filter were manufactured in the same manner as in Example 2, except that cores comprising tin serving as metal having a low-melting point were used and that, after the formation of the cured body, it was heated to 240°C of the melting point of tin or more so that the cores were melted and removed.

(Example 6)
A honeycomb structured body and a honeycomb filter were manufactured in the same manner as in Example 2, except that cores made by melt-molding sodium chloride (NaCl) serving as water-soluble salt were used, and that, after the formation of the cured body, the cores were eluted and removed by dissolving the sodium chloride in warm water at 60°C.

(Example 7)
A honeycomb structured body and a honeycomb filter were manufactured in the same manner as in Example 2, except that cores having a step difference, illustrated in Fig. 5 (c) (with a portion of 4.5 mm × 4.5 mm and a portion of 3.5 mm × 3.5 mm having a total length of 60 mm) were used.

(Example 8)
By using a resin-curing process (metal molding) as the method for manufacturing the honeycomb structured body, a honeycomb structured body was manufactured.
(1) Mixing process
A mixture was prepared in the same manner as in Example 2.

(2) Mixture-filling process
The mixture obtained in process (1) was poured into a frame member, comprising Ni-Cr stainless steel, which is configured by a round bottom plate (160 mm in diameter) on which pillar members having a pillar shape (4.5 mm × 4.5 mm × 60 mm) were vertically installed in a lattice pattern with intervals of 2 mm and a can-type (cylindrical) container (inner diameter: diameter 160 mm × 60 mm in length in the longitudinal direction) installed on the periphery of the bottom plate; thus, the frame member was filled with the mixture.

(3) Resin-curing process
A cured resin body was manufactured in the same manner as in Example 2.

(4) Frame-member removing process
The entire frame member was separated and removed by drawing the pillar members out of the cured resin body as well as by detaching the outer frame member therefrom. Thus, a molded body having a size of 160 mm in diameter × 60 mm in length in the longitudinal direction was obtained. Moreover, a honeycomb structured body and a honeycomb filter were manufactured in the same manner as in Example 2 by carrying out the processes of the drying process and thereafter.

(Example 9)
By using a three-dimensional sheet-forming process as the method for manufacturing the honeycomb structured body, a honeycomb structured body was manufactured.
(1) Mixing process
First, 1.0 part by weight of alumina fibers (average fiber length: 0.3 mm, average fiber diameter: 5 µm) made from 72% of alumina and 28% of silica, 0.5 parts by weight of glass fibers (average fiber diameter: 9 µm, average fiber length: 3 mm), 0.08 parts by weight of an organic binder (polyvinyl alcohol) and 50 parts by weight of water were mixed, and sufficiently stirred to prepare a mixture.

(2) Mixture-filling process and stirring process
The mixture obtained in process (1) was charged into a liquid-filling portion of a vessel having a volume of 50 liters with the height of the liquid-filling portion being set to 200 mm, and by activating a vibrator attached to the vessel, the mixture in the vessel was stirred so as to be uniformly mixed.

(3) Dehydration process and compressing process (three-dimensional sheet-forming process)
By activating a draining pump with the cock on the vessel lower portion being open, the moisture of the mixture inside the vessel was drained through the mesh so that the mixture was dehydrated to form a dehydrated body.
Next, a pressing plate was mounted thereon, with the through holes of the pressing plate being fitted to the positions of the pillar-shaped masks, and by operating motors coupled to ball screws, the pressing plate was pressed to be inserted in a direction toward the lower portion until the dehydrated body had been compressed to 60 mm in length so that a compressed body was formed.

(4) Mask-removing process
By removing the pillar-shaped masks from the compressed body, a molded body having a size of 160 mm in diameter × 60 mm in length in the longitudinal direction was obtained.
Moreover, a honeycomb structured body and a honeycomb filter were manufactured by carrying out the processes of the drying process and thereafter in the same manner as in Example 1.

(Comparative Example 1)
By using a process for laminating a number of sheet-shaped lamination members as the method for manufacturing the honeycomb structured body, a honeycomb structured body was manufactured.
(1) Preparation of sheet-forming slurry
By using the same processes as in Example 1, a mixture was prepared, and this was sufficiently stirred to prepare a slurry for use in sheet-forming.

(2) Sheet-forming process
The slurry obtained in process (1) was formed into a sheet by using a mesh having a diameter of 160 mm, and the resulting sheet was dried at 150°C, and then a punching process is carried out thereon so that a sheet-shaped inorganic fiber aggregated body having a thickness of 1 mm with cells, each having a size of 4.5 mm × 4.5 mm, being formed on the entire surface with mutual intervals of 2 mm, was formed.

(3) Catalyst-supporting process
The sheet-shaped inorganic fiber aggregated body obtained in process (2) was immersed in a solution containing 10 g of CZ (nCeO₂·mZrO₂), 40 ml of water and an appropriate amount of pH adjusting agent for 5 minutes, and a firing process was then carried out thereon at 500°C so that CeO₂ and ZrO₂ were supported thereon as oxide catalysts.

(4) Laminating process
In the same manner as in Example 1, after one sheet of the lamination member for an end portion had been laminated, 68 sheets of the sheet-shaped inorganic fiber aggregated bodies were laminated, with the holes of the lamination member for an end portion being fitted to the positions of the through holes of the sheet-shaped inorganic fiber aggregated bodies, and lastly, one sheet of a metal lamination member was laminated thereon, and this further underwent a pressing process, and, thereafter, the pressing metal member was attached to the other end and fixed thereon; thus, a honeycomb filter having a length of 60 mm was manufactured.
In this process, the metal lamination members were laminated in such a manner that sealed portions were made different between the end face on the inlet side and the end face on the outlet side of the honeycomb filter (so that only either one of the ends of the superposed cells was sealed).

**[Table 1]**

| | Manufacturing method | Length (mm) | Number of sheets (number) | Irregularities in through hole | Core material | Pressure loss (kPa) |
|---|---|---|---|---|---|---|
| Example 1 | Extrusion-molding | 60 | 1 | No | - | 14.6 |
| Example 2 | Resin curing (with cores vertically installed) | 60 | 1 | No | Core sand | 14.4 |
| Example 3 | Resin curing (with cores vertically installed) | 60 | 1 | No | Core sand | 14.4 |
| Example 4 | Resin curing (with cores vertically installed) | 60 | 1 | No | PC | 14.4 |
| Example 5 | Resin curing (with cores vertically installed) | 60 | 1 | No | Tin | 14.5 |
| Example 6 | Resin curing (with cores vertically installed) | 60 | 1 | No | NaCL | 14.3 |
| Example 7 | Resin curing (with cores vertically installed) | 60 | 1 | Yes | Core sand | 13.5 |
| Example 8 | Resin curing (metal molding) | 60 | 1 | No | - | 14.5 |
| Example 9 | Three-dimensional sheet-forming | 60 | 1 | No | - | 14.2 |
| Comparative Example 1 | A number of sheets laminated | 60 | 68 | No | - | 16.2 |

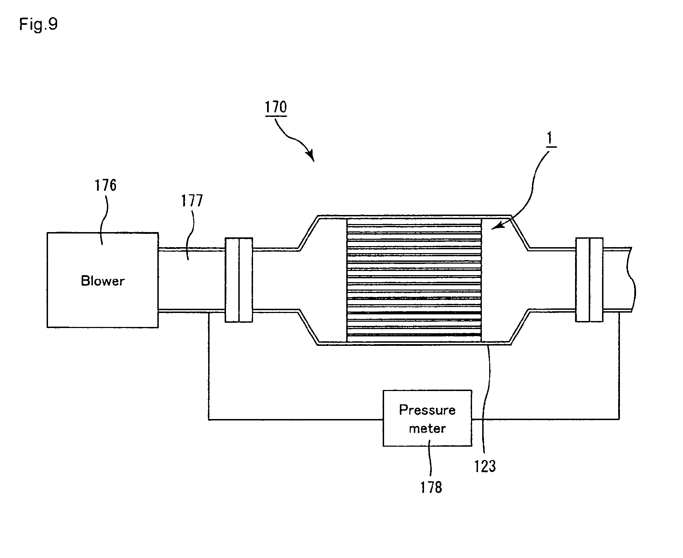

(Evaluation)
A pressure loss measuring apparatus 170 as illustrated in Fig. 9 was used for measurements on the pressure loss. Fig. 9 is an explanatory drawing that illustrates the pressure loss measuring apparatus.
This pressure loss measuring apparatus 170 has a structure in which a honeycomb filter 1, fixed in a metal casing 171, is placed in an exhaust gas pipe 177 connected to a blower 176, and a pressure meter 178 is attached so as to detect pressures before and after the honeycomb filter 1.
Here, the blower 176 was driven so that the flow rate of exhaust gases was set to 750 m³/h, and after a lapse of 5 minutes from the start of the driving operation, a pressure difference (pressure loss) was measured.
The results are shown in Table 1.

As shown in Table 1, with respect to the honeycomb structured bodies relating to Examples 1 to 9 in which the laminated sheet was only one sheet, the initial pressure loss was as low as from 13.5 to 14.6.
In particular, in the case of Example 10 with irregularities formed in the through hole, the pressure loss was low.

In contrast, in the honeycomb structured body relating to comparative Example 1, when the number of laminated sheets is as many as 68 sheets, the pressure loss becomes high due to many lamination interfaces.
Based on these facts, it is found that by using a honeycomb structured body in which only one laminated sheet is used (that is, a honeycomb structured body having inorganic fibers integrally formed), the pressure loss can be reduced in purifying exhaust gases, in comparison with a honeycomb structured body in which a number of sheet-shaped inorganic fiber aggregated bodies are laminated.

### BRIEF DESCRIPTION OF THE DRAWINGS

Fig. 1(a) is a perspective view that schematically illustrates one specific example of a honeycomb filter according to the sixth aspect of the present invention in which lamination members for end portions are laminated on the two ends of a honeycomb structured body according to the first aspect of the present invention, and Fig. 1(b) is an A-A line cross-sectional view of Fig. 1(a).
Fig. 2 is a cross-sectional view that schematically illustrates one portion of inorganic fibers that form the honeycomb structured body according to the first aspect of the present invention.
Fig. 3(a) is a perspective view that illustrates a honeycomb structured body and a lamination member for an end portion that form a honeycomb filter according to the sixth aspect of the present invention, and Fig. 3 (b) is a perspective view that illustrates a state in which the honeycomb structured body and the lamination member for an end portion, illustrated in Fig. 3(a), are laminated so that a honeycomb filter is manufactured.
Fig. 4 is a cross-sectional view that schematically illustrates a plunger-type molding machine to be used for molding a pillar-shaped molded body.
Figs. 5(a) (I) to (VI) are drawings that schematically illustrate processes from a process of vertical installation of cores to a core removing process in manufacturing processes of a honeycomb structured body according to the third aspect of the present invention, Fig. 5(b) is a top view that illustrates a state in which cores are installed vertically in a can-type (cylindrical) container, and Fig. 5(c) is a perspective view that illustrates one example of a core that has a step difference.
Figs. 6 (a) (I) to (V) are drawings that schematically illustrate processes from a mixture filling process to a frame -member removing process in manufacturing processes of a honeycomb structured body according to the fourth aspect of the present invention, and Fig. 6 (b) is a top view that illustrates a state in which pillar-shaped members are installed vertically in a can-type (cylindrical) container.
Fig. 7 (a) is a drawing that schematically illustrates a vessel to be used in manufacturing processes for a honeycomb structured body according to the fifth aspect of the present invention, and Fig. 7(b) is a top view that schematically illustrates a pressing plate to be used in a pressing process.
Fig. 8 is a cross-sectional view that schematically illustrates one example of an exhaust-gas purifying apparatus for a vehicle in which the honeycomb structured body according to the sixth aspect of the present invention is installed.
Fig. 9 is an explanatory drawing that illustrates a pressure loss measuring apparatus.
Fig. 10(a) is a perspective view that schematically illustrates a specific example of a lamination-type honeycomb filter which is formed by laminating lamination members, each comprising a sheet-shaped inorganic fiber aggregated body with through holes, Fig. 10 (b) is an A-A line cross-sectional view of Fig. 10(a), and Fig. 10(c) is an enlarged cross-sectional view of a portion indicated by B in Fig. 10(b).

### EXPLANATION OF SYMBOLS

- 1, 100: Honeycomb filter
- 10a: Honeycomb structured body
- 10b: Lamination member for an end portion
- 11, 111: Cell
- 13, 113: Wall portion
- 20: Can-type (cylindrical) container
- 21: Core
- 22: Mixture
- 23: Cured resin body
- 24: Pillar-shaped molded body
- 30: Frame member
- 31: Pillar member
- 32: Bottom plate member
- 33: Outer frame member
- 40: Vessel
- 41: Pillar-shaped mask
- 42: Mesh
- 43: Liquid-filling unit
- 47: Vessel main body
- 51: Inorganic fiber
- 52: Inorganic matter
- 74: Die
- 123: Casing (metal container)

## Claims

1. A pillar-shaped honeycomb structured body having a plurality of cells longitudinally placed in parallel with one another with a wall portion therebetween,
wherein
said honeycomb structured body mainly comprises inorganic fibers that are integrally formed therein.

2. The honeycomb structured body according to claim 1, comprising:
said inorganic fibers and an inorganic matter,
wherein
said inorganic fibers are firmly fixed to one another through said inorganic matter.

3. The honeycomb structured body according to claim 2,
wherein
said inorganic matter exists at an intersection of said inorganic fibers or in the vicinity thereof, and
said inorganic matter exists locally at the intersection or in the vicinity thereof.

4. The honeycomb structured body according to claim 2 or 3,
wherein
said inorganic matter is melted and solidified so that said inorganic fibers are fixed to one another.

5. The honeycomb structured body according to any of claims 2 to 4,
wherein
said inorganic fibers contain silica.

6. The honeycomb structured body according to any of claims 1 to 5,
wherein
said inorganic fibers comprise at least one kind selected from the group consisting of silicon carbide, alumina, basalt, silica, silica-alumina, titania and zirconia.

7. The honeycomb structured body according to any of claims 1 to 6,
wherein
a catalyst is supported on at least one portion of said inorganic fibers.

8. The honeycomb structured body according to claim 7,
wherein
said catalyst comprises an oxide catalyst containing at least CeO₂.

9. The honeycomb structured body according to claim 7 or 8,
wherein
said oxide catalyst is at least one kind selected from the group consisting of: CeO₂, ZrO₂ FeO₂ Fe₂O₃, CuO, CuO₂, Mn₂O₃, MnO and complex oxides indicated by a composition formula AₙB₁₋ₙCO₃, provided that in the formula, A is La, Nd, Sm, Eu, Gd or Y, B is an alkali metal or alkali-earth metal, and C is Mn, Co, Fe or Ni.

10. The honeycomb structured body according to any of claims 7 to 9,
wherein
the amount of support of said catalyst is set in the range of 10 to 200 g/l with respect to the apparent volume of said honeycomb structured body.

11. A method for manufacturing the honeycomb structured body according to claim 1, comprising:
mixing inorganic fibers A and inorganic fibers B and/or inorganic particles C that are melted at a temperature at which said inorganic fibers A are neither melted nor sublimated;
extrusion-molding a mixture obtained by mixing said inorganic fibers A and said inorganic fibers B and/or said inorganic particles C, by using a die with predetermined holes formed therein to form a pillar-shaped molded body with a number of cells formed in the longitudinal direction; and
carrying out a heating treatment on said molded body at a temperature of the heat-resistant temperature of said inorganic fibers A or less, and at a temperature of the softening temperature of said inorganic fibers B and/or said inorganic particles C or more.

12. A method for manufacturing the honeycomb structured body according to claim 1, comprising:
mixing inorganic fibers A and inorganic fibers B and/or inorganic particles C that are melted at a temperature at which the inorganic fibers A are neither melted nor sublimated, as well as resin;
installing vertically a plurality of pillar-shaped cores in a can-type container in a manner so as to make the long axis direction of the pillar-shaped cores used for forming cells in the honeycomb structured body in parallel with the longitudinal direction of the can-type container that is filled in with the mixture obtained by mixing said inorganic fibers A and said inorganic fibers B and/or said inorganic particles C, as well as in a manner so as to form a lattice pattern in a plan view;
filling said mixture into said can-type container in which said cores are vertically installed;
curing the resin in said mixture filled into said can-type container to form a cured resin body;
forming a pillar-shaped molded body in which a number of cells have been formed in the longitudinal direction, by removing said cores from said cured resin body;
removing organic substances contained in said molded body in which a number of cells have been formed in the longitudinal direction, by using a heat-degreasing operation; and
carrying out a heating treatment of said molded body that has been degreased, at a temperature of the heat-resistant temperature of the inorganic fibers A or less, and at a temperature of the softening temperature of the inorganic fibers B and/or the inorganic particles C or more.

13. A method for manufacturing the honeycomb structured body according to claim 1, comprising:
mixing inorganic fibers A and inorganic fibers B and/or inorganic particles C that are melted at a temperature at which the inorganic fibers A are neither melted nor sublimated, as well as resin;
filling said mixture, obtained by mixing said inorganic fibers A and said inorganic fibers B and/or said inorganic particles C, into a frame member, which is formed by a bottom plate on which pillar members used for forming cells of the honeycomb structured body are installed vertically to the main surface in a lattice pattern in a plan view and an outer frame member formed so as to enclose the periphery of the bottom plate and the pillar members;
curing the resin in said mixture filled in to form a cured resin body;
removing said pillar members from said formed cured resin body and then detaching the entire frame to form a pillar-shaped molded body in which a number of cells have been formed in the longitudinal direction;
removing organic substances contained in said pillar-shaped molded body in which a number of cells have been formed, by using a heat-degreasing operation; and
carrying out a heating treatment of said molded body that has been degreased, at a temperature of the heat-resistant temperature of said inorganic fibers A or less, and at a temperature of the softening temperature of said inorganic fibers B and/or said inorganic particles C or more.

14. A method for manufacturing the honeycomb structured body according to claim 1, by using a vessel including:
a vessel main body;
a mesh formed on the bottom portion of the vessel main body;
pillar-shaped masks that are installed vertically to said mesh and in a lattice pattern in a plan view, and are used for forming cells of the honeycomb structured body; and
a liquid-filling unit that forms each space surrounded by the pillar-shaped masks, with the mesh serving as the bottom face, into which the mixture is charged, comprising:
mixing inorganic fibers A and inorganic fibers B and/or inorganic particles C that are melted at a temperature at which the inorganic fibers A are neither melted nor sublimated;
charging the mixture, obtained by mixing said inorganic fibers A and said inorganic fibers B and/or said inorganic particles C, into said liquid-filling unit;
discharging moisture from said mixture through said mesh so that a dehydrated body is formed;
removing said pillar-shaped masks from said dehydrated body to form a pillar-shaped molded body having a number of cells formed in the longitudinal direction; and
carrying out a heating treatment of said pillar-shaped molded body in which a number of cells have been formed, at a temperature of the heat-resistant temperature of said inorganic fibers A or less, and at a temperature of the softening temperature of said inorganic fibers B and/or said inorganic particles C or more.

15. A method for manufacturing the honeycomb structured body according to any of claims 11 to 14,
wherein
said inorganic fibers B and/or said inorganic particles contain silica.

16. A method for manufacturing the honeycomb structured body according to any of claims 11 to 15,
wherein
said inorganic fibers A comprise at least one kind selected from the group consisting of silicon carbide, alumina, basalt, silica, silica-alumina, titania and zirconia.

17. A method for manufacturing the honeycomb structured body according to any of claims 11 to 16,
wherein
the blending ratio between said inorganic fibers A and said inorganic fibers B and/or said inorganic particles C is preferably set in the range of 2:8 to 8:2.

18. A method for manufacturing the honeycomb structured body according to any of claims 11 to 17, further comprising:
carrying out an acid treatment on said pillar-shaped molded body.

19. A method for manufacturing the honeycomb structured body according to any of claims 11 to 18, further comprising:
supporting an oxide catalyst on said inorganic fibers.

20. A honeycomb filter comprising:
the honeycomb structured body according to any one of claims 1 to 10,
wherein
either one of the ends of each of the cells of said honeycomb structured body is sealed so that said honeycomb structured body is allowed to function as a filter.

21. The honeycomb filter according to claim 20,
wherein
a lamination member for an end portion mainly comprising metal is laminated on each of two end portions of said honeycomb structured body.

22. The honeycomb filter according to claim 20 or 21,
wherein
said honeycomb structured body with either one of the ends of each of the cells sealed, or said honeycomb structured body and said lamination member for an end portion mainly comprising metal is/are installed in a metal container.

23. A method for manufacturing a honeycomb filter comprising:
laminating a lamination member for an end portion mainly comprising metal on each of two ends of a honeycomb structured body manufactured by the method for manufacturing a honeycomb structured body according to any of claims 11 to 19.

24. A method for manufacturing the honeycomb filter according to claim 23, further comprising:
installing said honeycomb structured body and said lamination member for an end portion mainly comprising metal in a metal container
